(19) Europäisches Patentamt
European Patent Office
Office européen des brevets

(11) Publication number: **0 415 799 B1**

# EUROPEAN PATENT SPECIFICATION

(45) Date of publication of patent specification: 07.12.94    (51) Int. Cl.⁵: **C04B 24/12**

(21) Application number: **90310949.4**

(22) Date of filing: **05.10.90**

(54) **Enhanced blended and portland cement compositions.**

(30) Priority: **06.10.89 US 418437**
**13.07.90 US 554040**
**06.10.89 US 418071**
**02.08.90 US 561754**

(43) Date of publication of application:
**06.03.91 Bulletin 91/10**

(45) Publication of the grant of the patent:
**07.12.94 Bulletin 94/49**

(84) Designated Contracting States:
**AT BE CH DE DK ES FR GB GR IT LI LU NL SE**

(56) References cited:
EP-A- 0 233 691          WO-A-85/01500
GB-A- 2 077 252          GB-A- 2 106 889
US-A- 2 031 621          US-A- 2 437 842
US-A- 4 473 405

CHEMICAL ABSTRACTS, vol. 97, no. 14, October 1982 Columbus, Ohio, USA& SU-A-923988 (INST. OF CEMENT IND.;STATE INST. OF APPLIED CHEMISTRY) 30-04-82 page275; ref. no. 114293F

CHEMICAL ABSTRACTS, vol. 112, no. 8, 19 February 1990 Columbus, Ohio, USA V.D.SAVCHENKO et al.: "Effect of Chemical Industry Wastes on the Kinetics ofGrinding and Properties of Silicate Materials" page 360; ref. no. 61687G Vopr.Khim.Khim.Tekhnol. 1988, 88, 65-70 (USSR)

(73) Proprietor: **W.R. Grace & Co.-Conn.**
**Grace Plaza,**
**1114 Avenue of the Americas**
**New York, New York 10036-7794 (US)**

(72) Inventor: **Gartner, Ellis Martin**
**1105 Tanley Road**
**Silver Spring, Maryland 20904 (US)**
Inventor: **Myers, David Francis**
**10920 Rock Coast Road**
**Columbia, Maryland 21044 (US)**
Inventor: **Gaidis, James Michael**
**9991 Timberknoll Lane**
**Ellicott City, Maryland 21043 (US)**

(74) Representative: **Bentham, Stephen et al**
**J.A. KEMP & CO.**
**14 South Square**
**Gray's Inn**
**London WC1R 5LX (GB)**

**Description**

This invention relates to a strength enhanced blended cement, and more specifically to a hydraulic blended cement containing an additive which improves the strength-set time profile of the blended cement to a level substantially equivalent to high quality portland cement. This invention further relates to an improved portland cement, and more specifically to an improved hydraulic portland cement containing a strength enhancing additive. The additive, in each case, comprises a higher trialkanolamine. When added and used with a portland cement containing composition, it provides enhanced 28 day strength to the resultant set or cured composition. When added to a blended cement, it improves the strength-set time profile of such cement to make it effectively equivalent to a higher quality portland cement.

The term cement is used to designate many different kinds of materials useful as binders or adhesives. Hydraulic cements are powdered materials which, when mixed with water, form a "paste" that hardens slowly. If, further mixed with a fine aggregate (e.g. sand), it forms a "mortar" and if mixed with fine and coarse aggregate (e.g. sand and stone) it forms "concrete" which are rock-hard products. These products are commonly referred to as hydraulic cement. Portland cement is distinguished from other cements by the different components of which it is composed, and the requirement that it meet particular standard specifications established in each country (see Cement Standards of the World, Cembureau, Paris, Fr.) For example, in the United States, the American Society for Testing and Materials (ASTM), American Association of State Highway and Transportation Officials, as well as other government agencies, have set certain basic standards for cement which are based on principal chemical composition requirements of the clinker and principal physical property requirements of the final cement mix. For purposes of this invention the term "portland cement" is intended to include all cementitious compositions which meet either the requirements of the ASTM (as designated by ASTM Specification C150), or the established standards of other countries.

Portland cement is prepared by sintering a mixture of components including calcium carbonate (as limestone), aluminum silicate (as clay or shale), silicon dioxide (as sand), and miscellaneous iron oxides. During the sintering process, chemical reactions take place wherein hardened nodules, commonly called clinkers, are formed. Portland cement clinker is formed by the reaction of calcium oxide with acidic components to give, primarily tricalcium silicate, dicalcium silicate, tricalcium aluminate, and a ferrite solid solution phase approximating tetracalcium aluminoferrite. For purposes of this invention, the variable compositions encompassing calcium ferrite solid solution will be referred to as tetracalcium aluminoferrite. The conventional cement chemists notation uses the following abbreviations:

$CaO$ = C
$SiO_2$ = S
$Al_2O_3$ = A
$Fe_2O_3$ = F

thus:

tricalcium silicate = $C_3S$
dicalcium silicate = $C_2S$
tricalcium aluminate = $C_3A$
tetracalcium aluminoferrite = $C_4AF$

After the clinker has cooled, it is then pulverized together with a small amount of gypsum (calcium sulfate) in a finish grinding mill to provide a fine, homogeneous powdery product known as portland cement. Due to the extreme hardness of the clinkers, a large amount of energy is required to properly mill them into a suitable powder form. Energy requirements for finish grinding can vary from about 33 to 77 kWh/ton depending upon the nature of the clinker. Several materials such as glycols, alkanolamines, aromatic acetates, etc., have been shown to reduce the amount of energy required and thereby improve the efficiency of the grinding of the hard clinkers. These materials, commonly known as grinding aids, are processing additives which are introduced into the mill in small dosages and interground with the clinker to attain a uniform powdery mixture. In addition to reducing grinding energy, the commonly used processing additives listed above are frequently used to improve the ability of the powder to flow easily and reduce its tendency to form lumps during storage.

Because of the rigid compositional and physical requirements for forming suitable portland cement clinker, clinker becomes a relatively expensive raw material. For certain applications, it is possible to substitute less expensive fillers such as limestone or clinker substitutes such as granulated blast furnace slags, natural or artificial pozzolana, and the like, for a portion of the clinker. As used herein, the term "filler" refers to an inert material that has no later age strength enhancing attributes; the term "clinker substitute" refers to a material that may contribute to long term compressive strength enhancement, but usually

2

exhibits little or no enhancement of 7 or 28-day compressive strength values. The addition of these fillers or clinker substitutes to form "blended cements" is limited in practice by the fact that such addition usually results in a diminution in the physical strength properties of the resultant cement. For example, when a filler such as limestone is blended in amounts greater than 5%, the resultant cement exhibits a marked reduction in strength, particularly with respect to the strength attained after 28 days of moist curing (28-day strength). The 28-day strength has particular significance and will be emphasized throughout this invention since it is the strength at this age which is most commonly used to assess the engineering properties of the final cement products. As used herein, the term "blended cements" refers to hydraulic cement compositions containing between 5 and 80%, more conventionally between 5 and 60%, fillers or clinker substitute materials.

Various other additives may be added to cement to alter the physical properties of the final cement. For example, alkanolamines such as monoethanolamine, diethanolamine, triethanolamine and the like are known to shorten the set time (set accelerators) as well as enhance the one-day compressive strength (early strength) of cements. However, these additives usually have little beneficial effect on the 28-day set strength of the finished cement and in some cases may actually diminish it. Various other polymeric amines and imines have been used as 28-day cement strength enhancers, however, due to the high costs of these additives, their use is somewhat limited.

Portland cements are formed from a combination of gypsum and clinker in accordance with set standards such as ASTM C150 as well as comparable standards in other countries. Normally, the amount of gypsum included in the mix is sufficient to give 2 to 5% $SO_3$ content to the mix. The gypsum content is, therefore, typically from 1 to 10% of the composition. The remainder of Portland cement composition would typically be clinker and 0 to 5% filler. In the case of blended cements, such cements are normally formed from 0 to 10% gypsum mixed with 5 to 80% filler and clinker substitutes and the remainder being clinker material. All percentages are by weight.

It has now been discovered that certain tertiary amines classified as tri(hydroxyalkyl) amines having at least one $C_3$-$C_5$ hydroxyalkyl group (hereinafter referred to as "higher trialkanolamine"), as fully described herein below, surprisingly imparts 7 and 28-day compressive strength enhancing properties to certain hydraulic blended cements. This discovery includes the use of triisopropanolamine (TIPA), which was previously believed to possess the equivalent cement additive properties as triethanolamine (TEA) (i.e., shortening set times and enhancing one-day compressive strengths,) but, instead, surprisingly exhibits unique 7 and 28-day compressive strength enhancing properties when added to certain hydraulic blended cements. Suitable hydraulic blended cements for use in the invention are those made from cement clinkers containing at least 4% tetracalcium aluminoferrite ($C_4AF$) by weight. The enhanced 7 and 28-day strength exhibited by these cements were unexpected and unobvious since $C_4AF$ was believed to have no cementing value in blended or other cements. These enhanced blended cement compositions are useful as a portland cement replacement.

In addition, it has been surprisingly found that the higher trialkanolamines, which are fully described herein below, provide unique 7 and 28-day compressive strength enhancing properties when added to certain hydraulic portland cements. The portland cements suitable for use in this invention are those containing at least 4% tetracalcium aluminoferrite ($C_4AF$) by weight. The enhanced 7 and 28-day strengths exhibited by these cements were unexpected and unobvious since $C_4AF$ was believed to have no cementing value in portland cements.

One of the objects of this invention to provide a hydraulic blended cement, prepared from a mixture of clinker, gypsum and a high proportion of filler or clinker substitute, together with a higher trialkanolamine additive, wherein the resultant blended cement compositions exhibits a 7 and 28-day strength profile in conformance with portland cement minimum standards.

Another object of this invention is to provide a hydraulic cement mix which contains at least one higher alkanolamine in combination with certain portland cements to improve the 7 and 28-day strength of the resultant cured mix.

Another object of this invention is to provide a cement additive that is effective as a grinding aid, improves the ability of the ground cement powder to flow easily, reduces the tendency of the cement to form lumps during storage, and enhances the 7 and 28-day strength.

Another object of this invention is to provide a process to enhance the 7 and 28-day strength of blended cements to a level in conformance with portland cement minimum standards.

In accordance with the present invention, there have been provided, certain hydraulic blended cement compositions, comprising a mixture of clinker, gypsum and from 5 to 80% fillers or clinker substitutes wherein the clinker contains at least 4% $C_4AF$, which when mixed with an additive comprising a higher trialkanolamine produces a hydraulic blended cement that exhibits the equivalent physical 7 and 28-day compressive strength properties of portland cement.

Further, in accordance with the present invention, there has been provided a novel portland cement composition, having at least 4% $C_4AF$ content and a higher alkanolamine, as fully described herein below. The invention is further directed to hydraulic cement mixes which contain a portland cement having at least 4% $C_4AF$, and a higher trialkanolamine to provide improved 7 and 28-day strength.

Also provided in accordance with this invention is a method of preparing enhanced strength hydraulic blended cements comprising intergrinding a mixture of clinker containing at least 4% $C_4AF$, gypsum and between 5% and 80% by weight filler or clinker substitute, together with an additive that is effective as a grinding aid, improves the ability of the ground cement to flow easily, reduces the tendency of the cement to form lumps during storage, and enhances the 7 and 28-day strength, said additive comprising at least one higher trialkanolamine, as fully described herein below.

The present invention is directed to an enhanced strength, hydraulic blended cement having a 7 and 28-day compressive strength in conformance with the minimum standards of a portland cement as defined in ASTM C150. The present invention is also directed to a strength enhancing additive and to certain hydraulic portland cement compositions containing the additive and exhibit increased later age compressive strength of the set cement mix.

The present blended cement composition and the present enhanced strength hydraulic portland cement composition are prepared by blending an additive into a suitable, blended cement or hydraulic portland cement, as described herein below. The additive is comprised of at least one higher trialkanolamine. The term "higher trialkanolamine" shall refer, in the present description and in the appended claims, to tertiary amine compounds which are tri(hydroxyalkyl) amines having at least one $C_3-C_5$ hydroxyalkyl (preferably a $C_3-C_4$ hydroxyalkyl) group therein. The remaining, if any, hydroxyalkyl groups of the subject tertiary amine can be selected from $C_1-C_2$ hydroxyalkyl groups (preferably $C_2$ hydroxyalkyl). Examples of such compounds include hydroxyethyl di(hydroxypropyl)amine, di(hydroxyethyl) hydroxypropylamine, tri-(hydroxypropyl)amine, hydroxyethyl di(hydroxy-n-butyl)amine, tri(2-hydroxybutyl)amine, hydroxybutyl di-(hydroxypropyl)amine, and the like. The preferred higher trialkanolamines of this invention are triisopropanolamine (TIPA), N,N-bis(2-hydroxyethyl)-N-(2-hydroxypropyl)amine (BHEHPA) and tri(2-hydroxybutyl) amine (T2BA). Mixtures of higher trialkanolamines can be used. The additive can be used either neat or as a solution and may be in the form of free amine or neat (amine) form or may be in neutralized form such as an acetate, gluconate, sulfate, nitrate, nitrite, and the like. Further, the additive may be converted into its ester form (e.g. an ester of an organic acid, preferably a lower acid such as an acetate ester), since, upon addition to the high pH of a hydrating cement, it will undergo hydrolysis and revert back to the alcohol.

The subject invention will be further described in terms of (though not limited to) the preferred higher trialkanolamines, (TIPA), (BHEHPA) and/or tri(2-hydroxybutyl)amine (T2BA). The higher trialkanolamines are added to blended or portland cement in an amount up to about 0.2%, preferably up to about 0.1%, and most preferably between about 0.005% and 0.03% based on the weight of the cement. The higher trialkanolamine can be used in very small dosages (e.g. as low as about 0.001%) with respect to the cement. The strength achieved at 7 and 28 days (particularly 28 days) is emphasized in this invention because of its use in standard engineering specifications. It has been unexpectedly found that the desired result with respect to blended cement compositions and to portland cement compositions can be attained with the small dosages described above when the cement is rich in $C_4AF$ component. The cement compositions of this invention are prepared by adding up to 0.2% of at least one higher trialkanolamine to a blended portland cement by either intermixing or intergrinding the additive with the cement. As used herein, the terms "intermixing" or the terms "interground" and "intermixed" refer to the particular stage of the cement processing in which the TIPA is added. It has been also found that the subject higher trialkanolamines are effective grinding aids, they may be added to the clinker during the finish grinding stage and thus interground to help reduce the energy requirements and provide a uniform free flowing cement powder with reduced tendency to form lumps during storage. It is also possible to add the subject additive, such as TIPA, as an admixture to powdered cement either prior to, in conjunction with, or after the addition of water when effecting the hydraulic setting of the cement. Further, the additives of this invention may be supplied in a pure concentrated form, or diluted in aqueous or organic solvents, and may also be used in combination with other chemical admixtures, including but not limited to: grinding aids accelerating admixtures, air entrainers, air detrainers, water-reducing admixtures, retarding admixtures (as defined in ASTM C494) and the like, and mixtures thereof.

Since there is little or no apparent loss of the higher trialkanolamines during the grinding process, they may be added to the portland cement clinker during the grinding to form the cement. The resultant cement-higher trialkanolamine composition exhibits pack set inhibition, improved ability of the ground cement

4

powder product to flow easily, and reduced tendency of the cement product to form lumps during storage.

It is also possible to add the higher trialkanolamine directly to powdered cements either prior to, in conjunction with, or after the addition of water when effecting the hydraulic setting of the cement mix. The cement mix, in the form of a paste, mortar or concrete, which is formed from the presently described composition of portland cement having at least 4% $C_4AF$ and at least one higher trialkanolamine in an amount of up to about 0.2% by weight based on the portland cement provides an improved mix which, when set or cured, exhibits enhanced 7 and 28 day compressive strengths.

Suitable blended cements for use in this invention are those made from cement clinkers which contain at least 4% tetracalcium aluminoferrite, ($C_4AF$), preferably greater than 5.5% $C_4AF$, and most preferably greater than 7% $C_4AF$. The effectiveness of the subject higher alkanolamines, such as TIPA, BHEHPA or T2BA and the like relates to the amount of $C_4AF$ in the clinker.

Suitable portland cements for use in this invention are those that contain at least 4% tetracalcium aluminoferrite ($C_4AF$), preferably greater than 5.5% $C_4AF$ and most preferably greater than 7% $C_4AF$. The effectiveness of the subject higher trialkanolamines, such as TIPA, BHEHPA, T2BA or the like, relates to the amount of $C_4AF$ in the clinker.

It has been unexpectedly found that clinkers with low $C_4AF$ contents which are used in forming blended cements or portland cements, either due to low total iron or to a preponderance of $Fe^{II}$ at the temperature of solidification of the clinker melt phase or for any other reason, are not affected by the strength enhancing effects of the subject higher trialkanolamines. During $C_4AF$ hydration, ferric ions are produced in solution as a byproduct. Since ferric ions are extremely insoluble at the high pH found in hydrating cement, they immediately precipitate as an amorphous ferric hydroxide gel. This gel coats the cement grain and tends to retard hydration of the cement as a whole. The higher trialkanolamines may serve to complex with the iron at high pH and help to remove this iron-rich coating, thereby improving the strength development of the cement. The table in Example 4 clearly illustrates the variation in strength enhancement at 28 days when TIPA was added to cements varying in $C_4AF$ concentration.

The current method to determine the concentration of $C_4AF$ in a cement is by the Bogue calculation, as specified in ASTM C150. This calculation provides an estimate of the concentration of the major phases present in a cement based on an elemental analysis. The values obtained may, however, be inaccurate in many cases because the Bogue calculation does not account for differences that may occur in the thermal processing history of the cement clinker or for the presence of minor components. Because the Bogue calculation assumes the iron is present only in the $C_4AF$ phase, the calculated values for $C_4AF$ concentration will be in error when a significant fraction of the iron in a cement is present in phases other than $C_4AF$. For example, in the case of cement "L" (as illustrated in Examples 3, 7 and 16), the $C_4AF$ concentration appears to be close to the normal concentration levels of the other cements, but it actually contains a low $C_4AF$ level. This suggests that the iron in this cement is not present in the $C_4AF$ solid solution as is normally the case (and assumed by the Bogue calculation), but is instead located in other phases.

For purposes of this invention, the concentration of $C_4AF$ in a cement will be calculated using data derived by x-ray diffraction (XRD) since these results are more representative of the actual $C_4AF$ concentration. Under this method, a cement sample is scanned in the region 30° to 35° $2\theta$ (CuK). The heights of the 141 $C_4AF$ peak [h($C_4AF$)] at 33.8° and the 440 $C_3A$ peak [h($C_3A$)] at 33.3° are measured and the ratio of the 141 $C_4AF$ peak height to the 440 $C_3A$ peak height is determined. This peak height ratio is proportional to the actual $C_4AF/C_3A$ concentration ratio. However, the proportionality constant (K) is not known and cannot be measured in an unambiguous way. In order to estimate this constant, the $C_4AF/C_3A$ concentration ratio was estimated from Bogue calculated values for these two phases in cements where the Bogue calculation is expected to be accurate. These Bogue-calculated $C_4AF/C_3A$ concentration ratios were then divided by the calculated peak height ratio from XRD to determine the proportionality constant, K. K was computed for 10 cements and found to have a value of 1.39 ± 0.47.

Next, this value of K, the XRD data, and the elemental analysis was used to compute the $C_4AF$ content for each cement. In order to do this, a mass balance was performed for alumina in the cement. The fact that all of the alumina must appear in the cement as $C_3A$, $C_4AF$, or as an impurity in the silicate phases can be expressed mathematically as

$$A^{Total} = A^{C_3A} + A^{C_4AF} + \delta A^{Total},$$

where $\delta$ is defined to be the fraction of alumina which appears in the silicate phases. This equation can be rearranged to yield

$$A^{Total}(1 - \delta) = A^{C_4AF}(1 + A^{C_3A}/A^{C_4AF}).$$

5

The ratio $A^C4^{AF}/A^C3^A$ is related to the ratio $[C_4AF]/[C_3A]$ by the stoichiometry of the compounds involved, so that

$$A^C4^{AF}/A^C3^A = 0.556\,[C_4AF]/[C_3A]\,.$$

A new constant, $K^*$, can be defined such that

$$A^C4^{AF}/A^C3^A = K^*\,(\,h(C_4AF)/h(C_3A)\,),$$

where $K^* = 0.556\,K$, K being the constant of proportionality defined above. Defining the peak-height ratio

$$h(C_4AF)/h(C_3A) = r\,,$$

the mass balance can be rewritten

$$A^C4^{AF} = A^{Total}(1 - \delta)/(1 + 1/K^*r)\,.$$

When the stoichiometric relationship between $C_4AF$ and A is employed, this can be written in the final form

$$[C_4AF] = 4.77\,A^{Total}(1 - \delta)/(1 + 1/K^*r)\,.$$

In general, the value of $\delta$ to be used in this equation is not known. However, an estimate of the $C_4AF$ content can be obtained by assuming that all of the alumina is in the $C_3A$ and $C_4AF$ phases, or $\delta = 0$. This estimate will give the highest possible value for the $C_4AF$ concentration threshold. Any value of $\delta > 0$ will lower the threshold below that computed for $\delta = 0$. Using this value for $\delta$, the value of K cited above, the value for r obtained from the XRD experiments, and the alumina content from the elemental analysis, the $[C_4AF]$ can be computed for any cement. The $C_4AF$ concentration was calculated for several cements, as shown in the column on the right in Table IV in example 4. (Note - The $C_4AF$ content of three cements (K, L, and O) were also measured using a technique described in Bulletin 166 of the Research and Development Laboratories of the Portland Cement Association. The $C_4AF$ content measured according to this bulletin agreed well with the $C_4AF$ concentration values obtained by XRD data in all these cases, whereas the Bogue calculated $C_4AF$ concentration values were inaccurate in two of the three cements (L and O).

Using the computed $[C_4AF]$, it appears that all of the cements in which the subject higher trialkanolamines provided strength enhancement have $[C_4AF]$ greater than 4%, whereas the two cements in which no strength enhancement was obtained have $[C_4AF]$ less than 4%. It appears, then, that a $C_4AF$ concentration greater than 4%, preferably greater than 5.5% and most preferably greater than 7% is required to provide useful strength enhancement at 7 and 28 days with the present additive.

It has been observed that the addition of the subject higher trialkanolamine to the blended or portland cement, while enhancing the later age strength of the resultant cement mix, also tends to increase the amount of air entrained in the cement mix. Analysis of various cement mix samples revealed an increase in air entrainment in excess of 2% when compared to cement mixes containing no additive. Thus, a preferred embodiment of this invention is a stable, homogeneous mixture of the subject strength enhancing additive and an air detraining agent (ADA) capable of reducing or eliminating the increased air entrainment in the cement mix.

Various air detraining agents are known to those skilled in the art, and a choice of a particular agent is not critical per se to this invention, provided, however, that it is compatible with the particular higher trialkanolamine contemplated for use (i.e. non-degrading) and is, preferably, soluble therein, or can be made soluble therein through addition of other ingredients. Suitable air detraining agents include, but are not limited to, nonionic surfactants such as phosphates, including tributylphosphate, phthalates, including diisodecylphthalate, block copolymers, including polyoxypropylene-polyoxyethylene-block copolymers, and the like, or mixture thereof.

The higher trialkanolamine/ADA mixture may be admixed with the cement powder, or interground with the cement clinker. When intergrinding these additive mixtures during the finish milling, it is important to choose an ADA which is relatively non-volatile so that it may withstand the heat generated by the mill and thus not evaporate. The most preferred ADAs for use when intergrinding with the cement clinker are nonionic polyoxypropylene-polyoxyethylene block copolymers having a molecular weight of at least 2500.

The ratio of the subject higher trialkanolamine to ADA of the mixture is typically in the range of 1:(0.1-2) based on weight, and is preferably in the range 1:(0.15-0.40). The mixture can be added to cement in amounts to provide a dosage of higher trialkanolamine of up to 0.2% based on the weight of cement content, preferably less than 0.1% and most preferably between 0.005 and 0.03%.

As stated above, the subject additive can be used with certain blended or portland cements to improve the 7 and 28 day compressive strengths of the resulting cement mix structure. The improved cement does not, however, provide any notable improved early strength and, therefore, conventional early strength enhancers can be incorporated into the portland cement to further improve the cement composition's properties. Agents capable of enhancing early strength include lower alkanolamines as well as alkali metal salts, such as alkali metal hydroxides, sulfates, chlorides, acetates, formates, carbonates, silicates and the like. The preferred alkali metals are sodium and potassium. The alkali metal salt can be interground with the clinkers or added later including as an admixture just prior to structural formation. The alkali metal salt can be from various sources including kiln dust which is known to be rich in this material. The weight ratio of the subject trialkanolamine to alkali metal salt should be from about 0.002 to 4, preferably from about 0.01 to 1. Although alkali metal salts enhance early strength, they are generally believed to have a negative impact on later (28 day) strength. However, it has been found that a combination of these early strength enhancers with the higher trialkanolamine agents provided a cement composition which exhibits enhanced strength both in early (1 day) and latter (7 and 28 days) stages of cure.

Without further elaboration, it is believed that one skilled in the art, using the preceding detailed description can utilize the present invention to its fullest extent. The following examples are provided to illustrate the invention, but are not to be construed as limiting the invention in any way except as indicated in the appended claims. All parts and percentages are by weight unless otherwise indicated and additives are expressed as percent active ingredients as solids based on the weight of the cement (% s/c). Compressive strengths of the cement samples were determined in accordance with ASTM method C109.

The following examples were prepared using commercially available cements and clinkers. The following table (Table A) provides an elemental analysis of the cements and clinker as oxides and the corresponding clinker compound compositional analysis as calculated by the Bogue method (ASTM C150). The sample codes as used in this table will be used throughout the following examples to indicate which cements were used therein.

## Table A

### Analyses of Cements and Clinkers
### Elemental Analysis As Oxides, % by Mass

### Clinker Compound Compositions
### Cement Compounds, ASTM C150
### Calculation

| Cement | Na$_2$O | K$_2$O | MgO | CaO | Al2O3 | Fe2O3 | SiO2 | TiO2 | P2O5 | SO3 | L.O.I. | SrO | Mn2O3 | Total | C3S | C2S | C3A | C4AF | Compd. Totals |
|---|---|---|---|---|---|---|---|---|---|---|---|---|---|---|---|---|---|---|---|
| A | 0.08 | 0.59 | 0.71 | 64.51 | 4.36 | 3.43 | 21.40 | 0.18 | 0.03 | 2.85 | 1.21 | 0.03 | 0.04 | 99.42 | 56.25 | 18.92 | 6.31 | 10.44 | 91.91 |
| B | 0.00 | 0.74 | 3.29 | 65.74 | 4.25 | 2.74 | 21.46 | 0.20 | 0.04 | 0.86 | 0.59 | 0.03 | 0.05 | 99.98 | 68.00 | 10.23 | 7.26 | 8.34 | 98.83 |
| C | 0.31 | 0.40 | 1.97 | 65.78 | 3.86 | 3.01 | 22.44 | 0.24 | 0.07 | 0.58 | 0.43 | 0.22 | 0.09 | 99.40 | 63.27 | 16.60 | 5.96 | 9.16 | 94.99 |
| D | 0.28 | 0.55 | 3.80 | 64.50 | 4.60 | 3.60 | 21.60 | 0.20 | 0.10 | 0.61 | 0.08 | 0.00 | 0.00 | 99.92 | 58.61 | 17.71 | 6.89 | 10.95 | 94.17 |
| E | 0.21 | 0.38 | 3.55 | 63.25 | 4.40 | 2.91 | 21.45 | 0.23 | 0.07 | 2.54 | 0.99 | 0.00 | 0.00 | 99.98 | 51.49 | 22.65 | 7.53 | 8.86 | 90.53 |
| F | 0.15 | 0.63 | 0.86 | 64.65 | 4.22 | 3.37 | 21.51 | 0.18 | 0.05 | 2.80 | 1.38 | 0.05 | 0.05 | 99.90 | 57.01 | 18.66 | 6.09 | 10.25 | 92.02 |
| G | 0.12 | 0.66 | 4.22 | 63.77 | 4.46 | 2.89 | 22.24 | 0.29 | 0.06 | 0.33 | 0.25 | 0.12 | 0.08 | 99.49 | 53.20 | 23.63 | 7.86 | 8.79 | 93.48 |
| H | 0.18 | 0.73 | 2.06 | 65.00 | 4.12 | 3.32 | 22.54 | 0.23 | 0.10 | 1.00 | 0.15 | 0.07 | 0.06 | 99.56 | 55.82 | 22.51 | 6.18 | 10.10 | 94.61 |
| I | 0.29 | 0.54 | 0.00 | 65.00 | 5.00 | 3.00 | 22.00 | 0.00 | 0.00 | 2.00 | 0.00 | 0.00 | 0.00 | 97.83 | 53.83 | 22.46 | 8.17 | 9.13 | 93.60 |
| J | 0.37 | 0.21 | 1.84 | 64.56 | 5.51 | 2.74 | 20.93 | 0.24 | 0.07 | 1.98 | 1.12 | 0.12 | 0.04 | 99.73 | 55.09 | 18.45 | 10.79 | 8.34 | 92.66 |
| K | 0.10 | 1.10 | 1.72 | 64.91 | 5.81 | 2.60 | 21.75 | 0.33 | 0.05 | 1.33 | 0.00 | 0.00 | 0.00 | 99.70 | 49.85 | 24.75 | 12.00 | 7.91 | 94.52 |
| L | 0.12 | 0.22 | 1.14 | 67.25 | 6.12 | 2.44 | 21.89 | 0.26 | 0.11 | 0.02 | 0.00 | 0.00 | 0.00 | 99.57 | 60.26 | 17.29 | 13.07 | 7.42 | 98.05 |
| M | 0.04 | 0.45 | 1.60 | 65.48 | 4.85 | 0.19 | 21.73 | 0.20 | 0.00 | 2.97 | 2.03 | 0.00 | 0.00 | 99.54 | 58.75 | 17.98 | 13.06 | 0.58 | 90.37 |
| N | 0.00 | 0.71 | 1.13 | 65.28 | 6.03 | 4.28 | 20.45 | 0.45 | 0.00 | 1.59 | 0.71 | 0.00 | 0.00 | 100.63 | 56.15 | 16.27 | 9.93 | 13.02 | 95.37 |
| O | 0.10 | 0.38 | 0.84 | 65.44 | 2.92 | 4.67 | 24.14 | 0.44 | 0.14 | 0.08 | 0.00 | 0.00 | 0.00 | 99.15 | 52.52 | 29.59 | 1.37 | 14.21 | 97.69 |
| P | 0.00 | 0.33 | 1.31 | 62.08 | 6.17 | 3.46 | 20.53 | 0.37 | 0.00 | 3.67 | 1.04 | 0.00 | 0.00 | 99.46 | 37.35 | 30.68 | 11.48 | 10.53 | 90.04 |
| Q | 0.45 | 0.28 | 2.73 | 60.95 | 3.77 | 2.19 | 21.59 | 0.30 | 0.00 | 2.55 | 1.92 | 0.00 | 0.00 | 96.73 | 46.30 | 26.97 | 7.08 | 6.66 | 87.01 |
| T | 0.00 | 0.32 | 3.03 | 58.99 | 4.63 | 4.70 | 19.80 | 0.34 | 0.00 | 2.30 | 4.04 | 0.00 | 0.00 | 98.15 | 43.00 | 24.33 | 5.22 | 14.30 | 86.85 |
| R | 0.00 | 0.64 | 2.24 | 64.56 | 4.65 | 2.13 | 23.76 | 0.22 | 0.02 | 0.95 | 0.44 | 0.00 | 0.02 | 99.63 | 43.64 | 35.20 | 9.35 | 6.48 | 94.67 |
| S | 0.23 | 0.47 | 1.84 | 65.31 | 5.04 | 2.63 | 23.18 | 0.29 | 0.16 | 0.46 | 0.00 | 0.00 | 0.00 | 99.61 | 47.75 | 30.43 | 10.10 | 8.00 | 96.29 |

## Example 1

This example illustrates the enhanced strength obtained by limestone blended cements (LBC) relative to portland cements (PC) when interground with triisopropanolamine. Three samples of portland cement clinker were obtained and analyzed for $C_4AF$ content by x-ray diffraction. As indicated in Table I, all three cement clinkers contained greater than 4% $C_4AF$. The limestone blended cements were produced by mixing 2500 g of a mixture of clinker, gypsum, and limestone in a laboratory ball mill and grinding the mixture to a fine powder by revolving the mill 4000 times. The resulting cement was used to produce ASTM C109 mortars. The relative strength of limestone blended cement as compared to a portland cement was determined by producing cements with the following compositions:

1) blank (no limestone or TIPA)
2) TIPA only
3) limestone only
4) limestone and TIPA.

The samples were allowed to cure to an age of 28 days under limewater, and then evaluated for relative strength. The $C_4AF$ concentrations were determined by x-ray diffraction analysis for each of the cements. Table I below shows a significant 28-day strength enhancement obtained in the limestone blended cements containing 0.02% TIPA as compared to the ordinary portland cement.

Table I

| Strength Enhancement with TIPA in Limestone Blended Cements | | | | | |
|---|---|---|---|---|---|
| Clinker | % $C_4AF$ | Cement | 28 Day Strength, kPa (psi) | | Strength Enhancement, |
| | | | Blank | 0.02% TIPA | |
| D | 9.99 | PC | 47229(6850) | 51435(7460) | + 9 |
| | | LBC | 28958(4200) | 33784(4900) | +17 |
| H | 8.38 | PC | 45712(6630) | 55089(7990) | +21 |
| | | LBC | 27717(4020) | 34267(4970) | +24 |
| C | 8.83 | PC | 47850(6940) | 52193(7570) | + 9 |
| | | LBC | 36060(5230) | 44609(6470) | +24 |
| Note: PC = Portland Cement (95% clinker, 5% gypsum) LBC = Limestone Blended Cement (75% clinker, 20% limestone, 5% gypsum) | | | | | |

Example 2

This example illustrates the unexpected superiority of TIPA as a 7 and 28-day strength enhancer for blended cements when compared to triethanolamine (TEA).

A number of limestone blended cements were produced by combining 2500g of a mixture of clinker, gypsum, limestone, and the desired processing additive in a laboratory ball mill, and grinding the materials to a fine powder by revolving the mill 4000 times. Unless otherwise noted, the composition of each cement was 1875g clinker, 500g limestone, and 125g gypsum. Standard mortars were produced with these cements using the procedure specified in ASTM C109 (w/c = 0.485, sand/cement = 2.75), and compressive strengths of 5.08 cm (2 inch) cubes made with the mortars measured at 1, 7 and 28 days. For each clinker used, at least two cements were produced: one with no addition of processing additive, and one in which 0.5 g of TIPA was added to the 2500g batch of cement (a 0.02% addition) after the initial 100 revolutions of the mill. In some cases a third cement was produced in which 0.5g of TEA was substituted for TIPA. Table II below shows that for each clinker used, the 28 day compressive strength of the cements containing TIPA exceeded that of the control and, where applicable, the cements containing TEA, except for cement L, which has a $C_4AF$ content less than 4%. At 7 days, TIPA outperformed the control and TEA for all but cements L and O.

Table IIa

| Results of 1 Day Strength Tests with Laboratory Ground Portland Cements | | | |
|---|---|---|---|
| Clinker | Compressive Strength at 1 Day, kPa (psi)[1] | | |
| | Control | TIPA | TEA |
| C | 11238(1630)[100] | 10066(1460)[90] | 13100(1900)[117] |
| C | 11101(1610)[100] | 10687(1550)[96] | 12480(1810)[112] |
| C | 11307(1640)[100] | 12893(1870)[114] | 15031(2180)[133] |
| C | 11997(1740)[100] | 14341(2080)[120] | 15444(2240)[129] |
| C | 11445(1660)[100] | 15100(2190)[132] | nm[2] |
| D | 8756(1270)[100] | 10480(1520)[120] | nm |
| H | 9584(1390)[100] | 17030(2470)[178] | nm |
| K | 19236(2790)[100] | 22063(3200)[115] | 22339(3240)[116] |
| K | 15375(2230)[100] | 17168(2490)[112] | 17030(2470)[111] |
| O | 5654( 820)[100] | 5792( 840)[102] | 8136(1180)[144] |
| O | 5723( 830)[100] | 6826( 990)[119] | 8343(1210)[146] |
| L | 13927(2020)[100] | 11238(1630)[ 81] | 12755(1850)[ 92] |
| L | 4551( 660)[100] | 1999( 290)[ 44] | 3172(460)[70] |
| G | 15306(2220)[100] | 15582(2260)[102] | nm |
| B | 12962(1880)[100] | 15582(2260)[120] | 15720(2280)[121] |

[1] values in the square brackets are compressive strengths reported as a percentage of the control.
[2] nm = not measured

Table IIb

| Results of 7 Day Strength Tests with Laboratory Ground Portland Cements | | | |
|---|---|---|---|
| Clinker | Compressive Strength at 7 Days, kPa (psi)[1] | | |
| | Control | TIPA | TEA |
| C | 30475(4420)[100] | 32267(4680)[106] | 31164(4520)[102] |
| C | 28613(4150)[100] | 33371(4840)[117] | 31785(4610)[111] |
| C | 34750(5040)[100] | 43851(6360)[126] | 42196(6120)[121] |
| C | 36197(5250)[100] | 43230(6270)[119] | 37783(5480)[104] |
| C | 35646(5170)[100] | 43299(6280)[121] | nm[2] |
| D | 32681(4740)[100] | 40265(5840)[123] | nm |
| H | 32750(4750)[100] | 41506(6020)[127] | nm |
| K | 42403(6150)[100] | 45850(6650)[108] | 41575(6030)[98] |
| K | 36060(5230)[100] | 44058(6390)[122] | 41024(5950)[114] |
| O | 27441(3980)[100] | 26545(3850)[ 97] | 31302(4540)[114] |
| O | 27510(3990)[100] | 29096(4220)[106] | 29234(4240)[106] |
| L | 41438(6010)[100] | 38886(5640)[ 94] | 34198(4960)[ 83] |
| L | 34336(4980)[100] | 30130(4370)[ 88] | 29096(4220)[ 85] |
| G | 39231(5690)[100] | 42472(6160)[108] | nm |
| B | 43299(6280)[100] | 48401(7020)[112] | 42679(6190)[ 99] |

[1] values in the square brackets are compressive strengths reported as a percentage of the control.
[2] nm = not measured

Table IIc

| Results of 28 Day Strength Tests with Laboratory Ground Portland Cements | | | |
|---|---|---|---|
| Clinker | Compressive Strength at 28 Days, kPa (psi)[1] | | |
| | Control | TIPA | TEA |
| C | 40403(5860)[100] | 46609(6760)[115] | 38886(5640)[ 96] |
| C | 41713(6050)[100] | 48884(7090)[117] | 43161(6260)[105] |
| C | 50676(7350)[100] | 55227(8010)[109] | 53228(7720)[105] |
| C | 50401(7310)[100] | 51159(7420)[102] | 46884(6800)[ 93] |
| C | 49918(7240)[100] | 55848(8100)[112] | nm[2] |
| D | 47229(6850)[100] | 51435(7460)[109] | nm |
| H | 45712(6630)[100] | 55089(7990)[121] | nm |
| K | 52469(7610)[100] | 55985(8120)[107] | 49435(7170)[ 94] |
| K | 50814(7370)[100] | 54124(7850)[107] | 50056(7260)[ 99] |
| O | 41920(6080)[100] | 45712(6630)[109] | 47505(6890)[104] |
| O | 45712(6630)[100] | 47022(6820)[103] | 43437(6300)[ 95] |
| L | 50332(7300)[100] | 44954(6520)[ 89] | 43713(6340)[ 87] |
| L | 45574(6610)[100] | 38128(5530)[ 84] | 35577(5160)[ 78] |
| G | 48470(7030)[100] | 52952(7680)[109] | nm |
| B | 54193(7860)[100] | 56123(8140)[104] | 52331(7590)[ 97] |

[1] values in the square brackets are compressive strengths reported as a percentage of the control.

[2] nm = not measured

Example 3

A number of portland cements were produced to show the relationship of strength enhancement due to TIPA and the $C_4AF$ content of the cement. The cement compositions were in the range 95-97% clinker and 3-5% gypsum. A total of 2500g of cement was produced from these raw materials by revolving the mill 4000 times at 110°C. Standard mortars were produced with the cements using the procedure specified in ASTM C109 (w/c = 0.485, sand/cement = 2.75), with compressive strengths of 2-inch cubes made with the mortars measured at 28 days. For each clinker used, at least two cements were produced: one with no addition of any additive, and an identical one in which 0.5 g of TIPA was added to the 2500 g batch of cement (a 0.02% addition) after the initial 100 revolutions of the mill. In some cases a third cement was produced in the same way, but with 0.5g of TEA added instead of TIPA.

In addition to the mortar tests, the $C_4AF$ concentration was determined by x-ray diffraction (XRD) analysis for each of the cements. Table III illustrates the relative 28-day compressive strengths of cements containing TIPA as compared to controls (cements containing no additives) and cements containing TEA. In all cases the strength of the cement containing TIPA exceeds that of the control, except in those cements where the $C_4AF$ concentration is below 4%. This shows that the addition of TIPA is only beneficial for improving the strength of cements containing at least 4% $C_4AF$.

EP 0 415 799 B1

Example 4

This example illustrates the effectiveness of TIPA as a strength enhancer when used as an admixture in cement powders. 5.08 cm (2 inch) mortar cubes were produced from a number of commercially available

## TABLE III

### RESULTS OF STRENGTH TESTS AND X-RAY ANALYSES OF LABORATORY GROUND PORTLAND CEMENTS

Compressive Strength at 28 Days, kPa (psi) [% of control]

| Clinker | Control | TIPA | TEA | $C_4AF$ Concentration |
|---------|---------|------|-----|-----------------------|
| C | 40403 (5860) [100] | 46609 (6760) [115] | 38886 (5640) [ 96] | 8.83 |
| C | 41713 (6050) [100] | 48884 (7090) [117] | 43851 (6360) [105] | 8.83 |
| C | 50676 (7350) [100] | 55227 (8010) [109] | 53228 (7720) [105] | 8.83 |
| C | 50401 (7310) [100] | 51159 (7420) [102] | 46884 (6800) [ 93] | 8.83 |
| C | 49918 (7240) [100] | 55848 (8100) [112] | nm[1] | 8.83 |
| D | 47229 (6850) [100] | 51435 (7460) [109] | nm | 9.99 |
| H | 45712 (6630) [100] | 55089 (7990) [121] | nm | 8.38 |
| K | 52469 (7610) [100] | 55985 (8120) [107] | 49435 (7170) [ 94] | 7.16 |
| K | 50814 (7370) [100] | 54124 (7850) [107] | 50056 (7260) [ 99] | 7.16 |
| O | 41920 (6080) [100] | 45712 (6630) [109] | 47505 (6890) [104] | 7.22 |
| O | 45712 (6630) [100] | 47022 (6820) [103] | 43437 (6300) [ 95] | 7.22 |
| L | 50332 (7300) [100] | 44954 (6520) [ 89] | 43713 (6340) [ 87] | 3.57 |
| L | 45574 (6610) [100] | 38128 (5530) [ 84] | 35577 (5160) [ 78] | 3.57 |
| G | 48470 (7030) [100] | 52952 (7860) [109] | nm | 9.13 |
| B | 54193 (7860) [100] | 56123 (8140) [104] | 52331 (7590) [97] | 9.97 |

[1] not measured

EP 0 415 799 B1

cements using the procedure specified in ASTM C109. Additives, if used, were added to the mixing water before addition to the cement. The TIPA dosage was varied in order to determine the optimum rate of addition. Compressive strength measurements at 1, 7, and 28 days show that TIPA enhances the strength of cements when admixed, as well as when interground with cements. The results also show an optimal TIPA dosage in the region of 0.01% to 0.02%; dosages above this level show no further benefit, and in some cases may be detrimental. The data are summarized in Table IV.

Table IV

| Compressive Strengths of ASTM C109 Mortars with Varying TIPA Dosages | | | | | |
|---|---|---|---|---|---|
| Cement | TIPA Dosage % s/c | Set time hrs$^2$ | Compressive Strength, kPa (psi) | | |
| | | | 1 Day | 7 Days | 28 Days |
| A | 0.0 | 3.2 | 23925(3470) | 55365(8030) | 62329(9040) |
| A | 0.005 | 3.3 | 25304(3670) | 57640(8360) | 63983(9280) |
| A | 0.01 | 3.1 | 27441(3980) | 62467(9060) | 73981(10730) |
| A | 0.02 | 3.3 | 26131(3790) | 59571(8640) | 73981(10730) |
| A | 0.03 | 3.2 | 28682(4160) | 57985(8410) | 72602(10530) |
| A | 0.05 | 3.0 | 28269(4100) | 56468(8190) | 75980(11020) |
| A | 0.07 | 3.3 | 26821(3890) | 61570(8930) | 72809(10560) |
| A | 0.10 | 3.6 | 26752(3880) | 58537(8490) | 69292(10050) |
| P | 0.0 | nm | nm | 25786(3740) | 35163(5100) |
| P | 0.005 | nm | nm | 28613(4150) | 35163(5100) |
| P | 0.01 | 4.1 | nm | 30475(4420) | 37576(5450) |
| P | 0.02 | 4.0 | nm | 29854(4330) | 36956(5360) |
| P | 0.03 | 4.3 | nm | 30544(4430) | 35577(5160) |
| P | 0.04 | 4.1 | nm | 29992(4350) | 37507(5440) |
| Q | 0.0 | 5.1 | 11376(1650) | 31716(4600) | 45850(6650) |
| Q | 0.005 | 5.3 | 11721(1700) | 33853(4910) | 47850(6940) |
| Q | 0.01 | 5.5 | 11928(1730) | 36060(5230) | 51435(7460) |
| Q | 0.02 | 5.8 | 11859(1720) | 35715(5180) | 52814(7660) |

[1]Test conditions were modified slightly for the experiments with Cement A; w/c = 0.385 (not 0.485), sand/cement = 2.5 (not 2.75).
[2]Measured with RMU Automatic Recording Penetrometers.

Example 5

The results presented in examples 2 and 3 show that TIPA is generally superior to TEA in its ability to improve the 28 day strength of cements. However, a potential shortcoming of TIPA is its inability to improve the 1-day strength of cements. Since TEA is known to be a good 1-day strength enhancer but not a 28-day strength enhancer, one would expect that replacing a portion of the TIPA with TEA would improve performance of the additive at 1 day, with a corresponding decrease in 28-day strength.

In order to test this, a number of cements were produced in a laboratory-scale ball mill using clinker "C". In the first test portland cement compositions comprising 95% clinker and 5% gypsum were produced. Additives were dissolved in 10 ml of deionized water and added to the other materials in the mill after the initial 100 revolutions of the mill. A total of 4000 revolutions were used to grind each cement. 5.08 cm (2 inch) mortar cubes were produced from these cements according to the method specified in ASTM C109. The mortar cubes were tested for compressive strength at 1, 7 and 28 days. The data in Table V show that replacement of TIPA with TEA improves the 1-day strength, with the 1-day strengths of TIPA/TEA mixtures falling in between those of neat TIPA and neat TEA, as expected. Unexpectedly, however, the replacement of a fraction of the TIPA with TEA also had a positive impact on the 28-day strength. Although the 7 and 28-day strengths of the cement containing neat TEA were far below those of the cements containing neat TIPA, (and in fact was considerably below the blank at 28 days), replacing some of the TIPA with TEA improved the 7-day strengths, and at 28 days the mixed additive performed significantly better than either TEA or TIPA alone.

13

Table V

| Results of Laboratory Test Grinds with TIPA/TEA Mixtures[2] | | | | | |
|---|---|---|---|---|---|
| Additive | Dosage, % s/c | Set time, hrs[1] | Compressive Strength, kPa (psi) | | |
| | | | 1 Day | 7 Days | 28 Days |
| None | - | 5.43 | 11997(1740) | 36197(5250) | 50401(7310) |
| TIPA | 0.02 | 5.27 | 14341(2080) | 43230(6270) | 51159(7420) |
| TEA | 0.02 | 4.65 | 15444(2240) | 37783(5480) | 46884(6800) |
| TIPA:TEA 1:3 | 0.02 | 4.83 | 15306(2220) | 37439(5430) | 55641(8070) |
| TIPA:TEA 1:1 | 0.02 | 4.65 | 14755(2140) | 42196(6120) | 52952(7680) |
| TIPA:TEA 3:1 | 0.02 | 4.82 | 14203(2060) | 43851(6360) | 55710(8080) |

[1] Measured with RMU Automatic Recording Penetrometers.
[2] Cements used in all cases were C.

Example 6

Several cement samples were produced by mixing varying amounts of clinker, limestone, gypsum, and organic additives in a ball mill and grinding the mixture to a fine powder. A total of 4000 revolutions were used to grind each cement. 5.08cm (2 inch) mortar cubes were produced from these cements according to the method specified in ASTM C109. The compressive strengths of these cubes were measured at 1, 7 and 28 days, and the results are summarized in Table VI. As is evident from the data, the substitution of limestone for 10% of the clinker (blank #2) reduced the relative 28 day strength (blank #1). The addition of diethanolamine (DEA) or triethanolamine (TEA) did not compensate the loss of strength due to the reduced clinker content. The addition of tetra(hydroxyethyl) ethylenediamine (THEED), tetra(hydroxypropyl) ethylenediamine (THPED) and triisopropanolamine produced mortars having 28-day compressive strengths in excess of the blank #1 value, with the greatest strength enhancement being produced by TIPA.

Sodium gluconate was added to a cement sample at a dosage of 0.01% together with 0.02% TIPA to test for improvement in early (1-day) and later (7 and 28-day) strengths. This sample showed substantial improvement in 1-day strength along with a small improvement in 28-day strength.

The addition of 0.02% TIPA to the 10% limestone blended cement boosts its strength to a level in excess of that achieved with the pure portland cement. For cements with a sufficient quantity of $C_4AF$ (greater than 4%), then, the addition of TIPA makes it possible to produce low cost limestone blended cements with properties similar to those of a more expensive portland cement.

Table VI

Results of Tests with Limestone Blended Cements (w/c = 0.485, sand/cement = 2.75)

| | Cement Composition (% by Mass) | | | | Dose | Set Time | Compressive Strength kPa (psi) | | |
|---|---|---|---|---|---|---|---|---|---|
| Clinker | Clinker | Limestone | Gypsum | Additive | (% s/s) | (hrs) | 1 Day | 7 Days | 28 Days |
| H | 95 | 0 | 5 | Blank #1 | – | 4.50 | 12135(1760) | 28406(4120) | 36956(5360) |
| H | 85 | 10 | 5 | Blank #2 | – | 3.75 | 11997(1740) | 27027(3920) | 34543(5010) |
| H | 85 | 10 | 5 | DEA | 0.02 | 4.08 | 12480(1810) | 27786(4030) | 34129(4950) |
| H | 85 | 10 | 5 | TEA | 0.02 | 3.42 | 14962(2170) | 29303(4250) | 34612(5020) |
| H | 85 | 10 | 5 | THEED | 0.02 | 3.75 | 14134(2050) | 29716(4310) | 38404(5570) |
| H | 85 | 10 | 5 | THPED | 0.02 | 3.83 | 11997(1740) | 30337(4400) | 42196(6120) |
| H | 85 | 10 | 5 | TIPA + Na Gluconate | 0.02 0.01 | 3.83 | 13927(2020) | 32474(4710) | 45368(6580) |
| H | 85 | 10 | 5 | TIPA | 0.02 | 3.67 | 12755(1850) | 36129(5240) | 44816(6500) |
| D | 95 | 0 | 5 | Blank #1 | – | 4.50 | 9239(1340) | 24890(3610) | 32819(4760) |
| D | 85 | 10 | 5 | Blank #2 | – | 4.42 | 9377(1360) | 24720(3520) | 32336(4690) |
| D | 85 | 10 | 5 | THEED | 0.02 | 4.25 | 13790(2000) | 30889(4480) | 38473(5580) |
| D | 85 | 10 | 5 | TIPA | 0.02 | 4.17 | 13100(1900) | 31854(4620) | 41438(6010) |

Example 7

Calculation of the lowest $C_4AF$ content with which TIPA will be useful as a strength enhancer.

In the specification it was explained that the $C_4AF$ content computed by the Bogue calculation is often in error, particularly in cases where time-temperature history of the clinker melt phase allows large quantities of iron to remain in the silicate phases of the hardened product. In the following table, cement "L" is one such example. In this case, the Bogue calculation predicts a large quantity of crystalline $C_4AF$ to be present, while the XRD pattern shows that very little is actually there. Since the strength enhancing properties of TIPA depend upon the presence of $C_4AF$, it was not surprising that TIPA was ineffective with this cement. There must, then be a $C_4AF$ content threshold below which TIPA is not useful. Based on the strength enhancement data and the Bogue-calculated $C_4AF$ contents in Table VII, the threshold would appear to be somewhere above 7.4%. However, since the XRD data show that the Bogue calculation overestimates the $C_4AF$ content for cement "L", the threshold is actually considerably less than this value. In order to better define the $C_4AF$ threshold concentration, a combination of the XRD and the elemental analysis of the cements cited in prior examples was used to determine actual $C_4AF$ contents, as outlined in the specification. The data in Table VII shows that at least 4% $C_4AF$ must be present in the cement in order to achieve 28-day strength enhancement with TIPA.

Table VII

Correlation Between Strength Enhancement with TIPA and the Computed C₄AF Concentration for 12 Cements

| Cement/ Clinker | Type of Addition[1] | [C₄AF] | | 28 Day Strength of Cement with TIPA, % of Control |
|---|---|---|---|---|
| | | From Boque | From calculation derived in text | |
| E | Ad | 8.855 | 9.263 | 123 |
| H | I.G. | 10.103 | 8.381 | 121 |
| I | Ad | 9.129 | 8.384 | 119 |
| I | Ad | 9.129 | 8.384 | 119 |
| C | I.G. | 9.159 | 8.831 | 117 |
| C | I.G. | 9.159 | 8.831 | 115 |
| F | Ad | 10.255 | 8.686 | 115 |
| C | I.G. | 9.159 | 8.831 | 112 |
| J | Ad | 8.338 | 7.649 | 109 |
| C | I.G. | 9.159 | 8.831 | 109 |
| G | I.G. | 8.794 | 9.126 | 109 |
| D | I.G. | 10.955 | 9.994 | 109 |
| K | I.G. | 7.912 | 7.162 | 107 |
| K | I.G. | 7.912 | 7.162 | 107 |
| B | I.G. | 8.338 | 9.972 | 104 |
| O | I.G. | 14.211 | 7.221 | 103 |
| C | I.G. | 9.159 | 8.831 | 102 |
| M | Ad | 0.578 | 1.350 | 91 |
| L | I.G. | 7.425 | 3.572 | 89 |
| L | I.G. | 7.425 | 3.572 | 84 |

[1] "Ad" = admixed, "I.G." - interground

Example 8

Masonry cements are a special subset of the class of limestone blended cements, usually containing 45% to 60% limestone by weight. Masonry cements were produced by grinding clinker, gypsum, and

17

limestone, in the proportions listed in Table VIII, for 5600 revolutions of a laboratory ball mill. Besides these inorganic ingredients, a triethanolamine acetate grinding aid was added to each of the cements at a dosage of 0.02% to insure that an appropriate level of cement fineness was achieved. In two cases, TIPA was also added at the 0.02% dosage. 5.08 cm (2 inch) mortar cubes were prepared from these cements, using a mortar consisting of 980g cement, 1680g ASTM C109 graded sand, 1680g ASTM C185 20-30 sand, and water corresponding to the water/cement ratio listed in the table. The cubes were cured and strength testing performed following the procedure in ASTM C109. The results shown in Table VIII indicate that TIPA is an excellent 7 and 28-day strength enhancer for masonry cements containing between 45 and 60% limestone.

## Table VIII
## Results of Test Grinds with Masonry Cements

| Composition | | | | Mortar | Mortar Compressive Strength, kPa (psi) | | |
|---|---|---|---|---|---|---|---|
| Clinker | Limestone | Gypsum | Additive[1] | w/c ratio[2] | 1 Day | 7 Days | 28 Days |
| 47.5 | 50 | 2.5 | none | 0.56 | 6136(890) | 14134(2050) | 17306(2510) |
| 47.5 | 50 | 2.5 | 0.02% TIPA | 0.53 | 5378(780) | 15168(2200) | 19167(2780) |
| 50.0 | 50 | 0.0 | none | 0.54 | 4344(630) | 13307(1930) | 16478(2390) |
| 50.0 | 50 | 0.0 | 0.02% TIPA | 0.54 | 4344(630) | 14824(2150) | 19236(2790) |

[1] Triethanolamine acetate was added to each cement at a 0.02% dosage.

[2] "w/c" = water/cement ratio. This ratio was adjusted to obtain an initial mortar flow (as defined in ASTM C109) of 110 ± 5%.

Example 9

Cements were produced by grinding a mixture of clinker (N) (79.3%), limestone (14.9%), kiln dust (2.9%), and gypsum (2.9%) for 2500 revolutions of a laboratory scale ball mill. TIPA (0.5g in 2500g of

EP 0 415 799 B1

cement, or 0.02%) was added to each cement after 100 revolutions of the mill. In all but one case, an air detraining agent was also added at this stage. Mortar cubes were produced for compressive strength tests using the procedure specified in ASTM C109, and standard mortars for air content tests were produced according to ASTM C185. The results of these tests are shown in Table IX. Note that all of the tested air detraining agents were effective in lowering the air content relative to the control which only contained TIPA. The addition of the air detrainers also had the effect of improving the compressive strengths at all ages.

Table IX

| TIPA/Air Detraining Agent (ADA) Mixtures | | | | | | |
|---|---|---|---|---|---|---|
| ADA | ADA Dose % s/c | Blaine SSA, % | ASTM C-185 Air Content, | Compressive Strength, kPa (psi) | | |
| | | | | 1 Day | 7 Days | 28 Days |
| none | - | 401 | 9.2 | 15237(2210) | 30544(4430) | 33922(4920) |
| Co-Polymer[1] | 0.004 | 392 | 8.1 | 18271(2650) | 35508(5150) | 38128(5530) |
| Co-Polymer | 0.005 | 407 | 7.9 | 18409(2670) | 34198(4960) | 35853(5200) |
| DF110L[2] | 0.005 | 404 | 8.1 | 17099(2480) | 31302(4540) | 35025(5080) |
| Motor Oil[3] | 0.005 | 399 | 8.3 | 17168(2490) | 31440(4560) | 36680(5320) |
| DIDP[4] | 0.005 | 409 | 8.2 | 17720(2570) | 33233(4820) | 39231(5690) |

Notes:
[1] Co-Polymer is polyoxyethylene-polyoxypropylene block copolymer having a molecular weight of at least 2500. [2] DF110L is a product of Air Products
[3] Motor oil used was 10W30 commercially available from Quaker State.
[4] DIDP = Diisodecylphthalate

Example 10

Four tests were conducted using combinations of TIPA and an alkali salt, $Na_2SO_4$, with the results summarized in Table X. In the first of these, test 1, the additives were interground with the cement in a laboratory ball mill as described in Example 2. In the remaining tests (2 - 4) the additives were dissolved in the water used to prepare standard ASTM C109 mortars. The results show that the 28-day strength of the TIPA/$Na_2SO_4$ combination was above that of the mix with only $NA_2SO_4$ in each case. Also, the 1-day strengths of the mixes with TIPA and $NA_2SO_4$ were always above those mixes containing only TIPA. Thus, combinations of TIPA and $Na_2SO_4$ provide improved performance over a range of ages, relative to the use of the compounds individually.

Table X

| Test | Cement | Additives | Compressive Strength, kPa (psi) | | |
|---|---|---|---|---|---|
| | | | 1 Day | 7 Days | 28 Days |
| 1 | O | none | 3585(520) | 28337(4110) | 42816(6210) |
| | O | 0.02% TIPA | 3999(580) | 25786(3740) | 46884(6800) |
| | O | 1.0% $Na_2SO_4$ | 3585(520) | 26269(3810) | 36060(5230) |
| | O | 0.2% TIPA + 1.0% $Na_2SO_4$ | 4551(660) | 31509(4570) | 46333(6720) |
| 2 | T | none | 8412(1220) | 31233(4530) | 43575(6320) |
| | T | 0.02% TIPA | 9101(1320) | 34887(5060) | 49366(7160) |
| | T | 1.0% $Na_2SO_4$ | 12135(1760) | 28406(4120) | 34681(5030) |
| | T | 0.02% TIPA + 2.0% $Na_2SO_4$ | 12411(1800) | 34198(4960) | 44058(6390) |
| 3 | Q | none | 8894(1290) | 26062(3780) | 41438(6010) |
| | Q | 0.02% TIPA | 9791(1420) | 29027(4210) | 48746(7070) |
| | Q | 0.02% $NaSO_4$ | 9722(1410) | 27648(4010) | 42196(6120) |
| | Q | 0.02% TIPA + 0.02% $Na_2SO_4$ | 9928(1440) | 29303(4250) | 47643(6910) |
| | Q | 0.02% TIPA + 0.04% $Na_2SO_4$ | 10549(1530) | 29510(4280) | 47022(6820) |
| 4 | T | none | 8963(1300) | 28337(4110) | 42196(6120) |
| | T | 0.02% TIPA | 10411(1510) | 31785(4610) | 46471(6740) |
| | T | 0.02% TIPA + 0.02% $Na_2SO_4$ | 11101(1610) | 33095(4800) | 47091(6830) |
| | T | 0.02% TIPA + 0.10% $Na_2SO_4$ | 12480(1810) | 34474(5000) | 47850(6940) |
| | T | 0.02% TIPA + 0.50% $Na_2SO_4$ | 13927(2020) | 33440(4850) | 44954(6520) |

Note: In test 1 the ingredients were interground with the cement. In the remaining tests the additives were admixed.

Example 11

Example 2 contrasts performance of TIPA from that of TEA; specifically, TIPA is far superior as a 7- and 28-day strength enhancer. Another higher molecular weight trihydroxyalkylamine, N,N-bis(2-hydroxyethyl)-N-(2-hydroxypropyl)amine (BHEHPA) was used and compared with TEA in the same manner as Example 2 except that the additives were admixed with the cement by predissolving them in the mix water used to prepare standard ASTM C109 them in the mix water used to prepare standard ASTM C109 mortars. Results are shown in Table XI. The substantial improvement in the 28-day strength shown when this additive was admixed with cement F indicates that this compound has later-age strength-enhancing properties similar to TIPA, while being distinctly different from TEA.

Table XI

| Additive | Flow % | Set Time, hrs | Compressive Strength, kPa (psi) | | |
|---|---|---|---|---|---|
| | | | 1 Day | 7 Days | 28 Days |
| none | 104 | 4.13 | 12617(1830) | 30199(4380) | 39438(5720) |
| TEA | 111 | 3.58 | 12824(1860) | 27993(4060) | 37232(5400) |
| BHEHPA | 108 | 3.67 | 13100(1900) | 30820(4470) | 43782(6350) |
| TIPA | 117 | nm | 15100(2190) | 33233(4820) | 45436(6590) |

Example 12

The higher trihydroxyalkylamine, tris(2-hydroxybutyl)amine (T2BA), was produced by reacting 1 mole of ammonia (in the form of an aqueous ammonium hydroxide solution) with 3 moles of 1,2-epoxybutane. NMR spectroscopy was used to confirm that the desired chemical product had been obtained. This product was then interground with clinkers R and S using the procedure in Example 2, with the results of mortar tests conducted with these cements shown in Table XII. Note that at the 0.02% dosage, T2BA is an excellent 7 and 28-day strength enhancer. At the 0.01% dosage with clinker R, good strength enhancement was observed at 7 days. At this dosage, however, the 28-day strength was neither improved or adversely affected, showing that the threshold dosage for 28-day strength enhancement by T2BA was not reached. The threshold dosage, which will vary from cement to cement, can be readily determined for any particular cement.

Table XII

| Clinker | Additive | Flow % | Set time, hrs | Compressive Strength, kPa (psi) | | |
|---------|----------|--------|---------------|---------|---------|---------|
| | | | | 1 Day | 7 Days | 28 Days |
| R | none | 132 | 4.78 | 7860(1140) | 29579(4290) | 48194(6990) |
| R | 0.01% T2BA | 133 | 4.50 | 8963(1300) | 31440(4560) | 47919(6950) |
| R | 0.02% T2BA | 134 | 4.53 | 9239(1340) | 32750(4750) | 51159(7420) |
| S | none | 130 | 5.38 | 12686(1840) | 42403(6150) | 52469(7610) |
| S | 0.02% T2BA | 152 | 5.17 | 14755(2140) | 44333(6430) | 58261(8450) |

Example 13

This example illustrates the enhanced compressive strengths of mortars produced from six different portland cements with the addition of triisopropanolamine (TIPA) when compared with cements prepared with no additives or with triethanolamine (TEA). 5.08cm (2 inch) mortar cubes were produced from a number of commercially available cements using the procedure specified in ASTM C109. Additives, if used, were added to the mixing water before the addition of the cement, at a dosage of 0.0002g of additive per gram of cement. Compressive strengths of the resulting cubes were measured at ages of 1, 7, and 28 days. In addition, x-ray diffraction patterns were obtained for each of the cements and the amount of $C_4AF$ present in the cement was determined using the calculation described in the specification. As is apparent from the data in Table XIII, the compressive strengths of cements in which TIPA was added exceeded those of cements containing no additives or TEA at 7 and 28 days, except in the case where the $C_4AF$ concentrationwas lowest (cement "M"). This shows that the addition of TIPA is only beneficial to the performance of those cements having at least 4% $C_4AF$.

TABLE XIII

Results of ASTM C109 Mortar Tests with TIPA and TEA
(w/c = 0.485, sand/cement = 2.75)

| Cement | Additive | Dosage, % s/c | % C₄AF | Set-Time hrs. | Compressive strength, kPa (psi) | | |
|---|---|---|---|---|---|---|---|
| | | | | | 1 Day | 7 Days | 28 Days |
| E | None | - | 9.26 | 5.42 | 13583(1970) | 34405(4990) | 45574(6610) |
| E | TEA | 0.02 | 9.26 | 5.25 | 14479(2100) | 34267(4970) | 48125(6980) |
| E | TIPA | 0.02 | 9.26 | - | 12893(1870) | 42058(6100) | 55985(8120) |
| F | None | - | 8.69 | 4.12 | 12617(1830) | 30199(4380) | 39438(5720) |
| F | TEA | 0.02 | 8.69 | 3.58 | 12824(1860) | 27993(4060) | 37232(5400) |
| F | TIPA | 0.02 | 8.69 | 4.08 | 15100(2190) | 33233(4820) | 45436(6590) |
| H | None | - | 8.38 | 4.37 | 9584(1390) | 35439(5140) | 47367(6870) |
| H | TEA | 0.02 | 8.38 | 4.33 | 9377(1360) | 34405(4990) | 44609(6470) |
| H | TIPA | 0.02 | 8.38 | 4.33 | 9515(1380) | 43575(6320) | 56399(8180) |
| I | None | - | 8.38 | 5.13 | 9722(1410) | 35439(5140) | 46333(6720) |
| I | TEA | 0.02 | 8.38 | 4.78 | 9860(1430) | 33026(4790) | 46264(6710) |
| I | TIPA | 0.02 | 8.38 | 5.05 | 9722(1410) | 43437(6300) | 55089(7990) |
| M | None | - | 1.35 | 3.07 | 26062(3780) | 39369(5710) | 49435(7170) |
| M | TEA | 0.02 | 1.35 | 3.20 | 23580(3420) | 36335(5270) | 43230(6270) |
| M | TIPA | 0.02 | 1.35 | 3.28 | 23511(3410) | 34956(5070) | 45230(6560) |
| P | None | - | 8.90 | 4.13 | 13514(1960) | 27441(3980) | 32681(4740) |
| P | TEA | 0.02 | 8.90 | 4.33 | 12962(1880) | 24821(3600) | 32267(4680) |
| P | TIPA | 0.02 | 8.90 | 4.12 | 14479(2100) | 31095(4510) | 38335(5560) |
| J | None | - | 7.65 | 3.72 | 11583(1680) | 43023(6240) | 46678(6770) |
| J | TIPA | 0.02 | 7.65 | 3.72 | 10894(1580) | 45368(6580) | 50676(7350) |

Example 14

As further evidence of the unexpected strength enhancing properties of TIPA, the relative strength enhancement at 28 days for various cements were compared when hydroxyethyl and hydroxypropyl derivatives of ammonia and hydroxyethyl and hydroxypropyl derivatives of ethylenediamine were admixed into respective samples of portland cements. Table XVII clearly shows the significant increase in strength enhancement when TIPA was admixed with a portland cement as compared to the TEA-containing cements (i.e. going from a hydroxyethyl to a hydroxypropyl derivative of ammonia). However there is no corresponding increase in strength enhancement when comparing the tetra(hydroxyethyl)ethylenediamine (THEED) containing cement to the tetra(hydroxypropyl)ethylenediamine (THPED) containing cement (i.e. going from a hydroxyethyl to a hydroxypropyl derivative of ethylenediamine) and, in fact, the data indicate there is actually a decrease in strength enhancement.

Table XIV

| Difference in properties between hydroxyethyl and hydroxypropyl derivatives of ethylenediamine and ammonia | | | | | |
|---|---|---|---|---|---|
| Cement | Mode of Addition | Strength at 28 Days, % of Blank | | | |
| | | TEA | TIPA | THEED | THPED |
| F | Ad | 107 | 117 | 127 | 115 |
| E | Ad | 105 | 122 | 122 | 112 |
| Ad = admixed | | | | | |

## Example 15

Several portland cements were produced by grinding a mixture of 2375 parts clinker H, 125 parts gypsum and 10 parts water for 4000 revolutions in a laboratory ball mill. In some cases, as shown in Table XVIII below, organic additives were added to the mill after the first 100 revolutions.

Using these cements, mortar cubes were produced for compressive strength tests according to the procedure specified in ASTM C109, and standard mortar samples for air content tests were produced according to ASTM C185. The results of these tests are shown in Table XV. Note that the addition of TIPA to the mix substantially improved the 7- and 28-day strengths despite a 2.51% increase in the air content. When surfactants were added along with the TIPA, the air content was reduced and a further increase in strength was achieved.

Table XV

TIPA/Air Detraining Agent (ADA) Mixtures

| Additives | Blaine SSA, m²/kg | C-109 Mortar Flow, % | Setting Time (1) Hrs. | C-185 (3) Mortar Air, % | Compressive Strength, kPa (psi) 1 Day | 7 Days | 28 Days |
|---|---|---|---|---|---|---|---|
| None | 375 | 135 | 4.93 | 8.14 | 9584(1390) | 32750(4750) | 45712(6630) |
| 0.02% TIPA | 371 | 131 | 4.45 | 10.65 | 17030(2470) | 41506(6020) | 55089(7990) |
| 0.02% TIPA + 0.004% Surfactant 25R1³ | 390 | 133 | 4.38 | 7.27 | 15927(2310) | 42541(6170) | 59433(8620) |
| 0.02% TIPA + 0.004% Surfacant 25R2³ | 282 | 134 | 4.35 | 8.03 | 14893(2160) | 42334(6140) | 57020(8270) |
| 0.02% TIPA + 0.004% Surfactant 31R2³ | 385 | 133 | 4.18 | 8.57 | 15237(2210) | 40196(5830) | 56123(8140) |

Notes: (1) Determined using RMU penetrometers on the C109 mortar
(2) w/c=0.63 for all C-185 tests
(3) Polyoxypropylene-polyoxyethylene block copolymers
25R - 2800 MW
25R2 - 3100 MW
31R2 - 3400 MW

## Claims

**Claims for the following Contracting States : AT, BE, CH, DE, DK, FR, GB, GR, IT, LI, LU, NL, SE**

1. A strength enhanced hydraulic blended cement comprising a mixture of clinker comprising at least 4% $C_4AF$ (tetracalcium aluminoferrite) by weight of the clinker, gypsum, 5% to 80% by weight filler or

EP 0 415 799 B1

clinker substitute together with an additive comprising a higher trialkanolamine having at least one $C_3$-$C_5$ hydroxyalkyl group, said amine being present in an amount of up to 0.2 weight percent based on the cement and sufficient to increase the 7 and 28 day compressive strength of the blended cement.

2. A blended cement according to claim 1 wherein the amount of higher trialkanolamine is from 0.005% to 0.03% by weight.

3. A blended cement according to claim 1 or 2, wherein the clinker comprises at least 7% $C_4AF$ by weight.

4. A blended cement according to claim 1, 2 or 3 wherein the additive comprises a mixture of at least one higher trialkanolamine having at least one $C_3$-$C_5$ hydroxyalkyl group and a water soluble alkali metal salt selected from hydroxide, sulfate, chloride, acetate, formate, carbonate and silicate or a mixture thereof.

5. A blended cement according to claim 1, 2, 3 or 4 wherein the higher trialkanolamine is triisopropanolamine, N,N-bis(2-hydroxyethyl)-N-(2-hydroxypropyl)amine, tris(2-hydroxybutyl)amine or a mixture thereof.

6. A blended cement according to any one of the preceding claims wherein the higher trialkanolamine is in the form of a quaternary salt or of an ester of an organic acid.

7. A process for enhancing the strength of hydraulic cement mixes formed from hydraulic blended cement which comprises, adding an effective amount of a higher trialkanolamine having at least one $C_3$-$C_5$ hydroxyalkyl group as a strength enhancing additive to increase the 7 and 28-day strength of the resultant hydraulic cement mix which comprises a mixture of gypsum, 5 to 80% in weight filler or clinker substitute and cement clinker comprising at least 4% $C_4AF$ (tetracalcium aluminoferrite) by weight of the clinker.

8. A process according to claim 7 wherein the additive is added during the formation of the hydraulic blended cement or during formation of the hydraulic cement mix.

9. A hydraulic portland cement composition comprising a portland cement comprising at least 4% $C_4AF$ (tetracalcium aluminoferrite) by weight in combination with an additive comprising at least one higher trialkanolamine having at least one $C_3$-$C_5$ hydroxyalkyl group, said amine being present in an amount up to 0.2 weight percent based on the cement and sufficient to increase the 7 and 28 day compressive strength of a cement mix formed with said composition.

10. A composition according to claim 9 wherein the amount of higher trialkanolamine is from 0.005 to 0.03 weight percent.

11. A composition according to claim 10 wherein the portland cement comprises at least 7 weight percent $C_4AF$.

12. A composition according to claim 9, 10 or 11 wherein the additive further comprises a water soluble alkali metal salt.

13. A composition according to any one of claims 9 to 12 wherein the additive further comprises an effective amount of at least one set accelerator, air entrainer, air detrainer, water reducer, or set retarder.

14. A composition according to claim 13 wherein the additive comprises a set accelerator comprising triethanolamine.

15. A composition according to any one of claims 9 to 14 wherein the higher trialkanolamine is triisopropanolamine, N,N-bis(2-hydroxyethyl)-N-(2-hydroxypropyl)amine, tris(2-hydroxybutyl)amine or a mixture thereof.

26

16. A hydraulic cement mix comprising a portland cement composition as claimed in any one of claims 9 to 14 and water in at least a sufficient amount to effect hydraulic setting of the cement and fine aggregate or coarse aggregate particulate material or a mixture thereof.

17. A structure formed from a hydraulic cement mix comprising, as a binding agent, the cement composition claimed in any one of claims 9 to 14.

18. A hydraulic cement mix comprising a hydraulic blended cement composition as claimed in any one of claims 1 to 6 and water in at least a sufficient amount to effect hydraulic setting of the cement and fine aggregate or coarse aggregate particulate material or a mixture thereof.

19. A structure formed from a hydraulic cement mix comprising, as a binding agent the cement composition claimed in any one of claims 1 to 6.

**Claims for the following Contracting State : ES**

1. A process of preparing a strength enhanced hydraulic blended cement characterised in that a clinker comprising at least 4% $C_4AF$ (tetracalcium aluminoferrite) by weight of the clinker, gypsum, 5% to 80% by weight filler or clinker substitute is mixed with an additive comprising a higher trialkanolamine having at least one $C_3$-$C_5$ hydroxyalkyl group, said amine being present in an amount of up to 0.2 weight percent based on the cement and sufficient to increase the 7 and 28 day compressive strength of the blended cement.

2. A process according to claim 1 wherein the amount of higher trialkanolamine is from about 0.005% to 0.03% by weight.

3. A process according to claim 1 or 2, wherein the clinker comprises at least 7% $C_4AF$ by weight.

4. A process according to claim 1, 2 or 3 wherein the additive comprises a mixture of at least one higher trialkanolamine having at least one $C_3$-$C_5$ hydroxyalkyl group and a water soluble alkali metal salt selected from hydroxide, sulfate, chloride, acetate, formate, carbonate and silicate or a mixture thereof.

5. A process according to any one of the preceding claims wherein the higher trialkanolamine is triisopropanolamine, N,N-bis(2-hydroxyethyl)-N-(2-hydroxypropyl)amine, tris(2-hydroxybutyl)amine or a mixture thereof.

6. A process according to any one of the preceding claims wherein the higher trialkanolamine is in the form of a quaternary salt or of an ester of an organic acid.

7. A process for enhancing the strength of hydraulic cement mixes formed from hydraulic blended cement which comprises, adding an effective amount of a higher trialkanolamine having at least one $C_3$-$C_5$ hydroxyalkyl group as a strength enhancing additive to increase the 7 and 28-day strength of the resultant hydraulic cement mix which comprises a mixture of gypsum, 5 to 80% in weight filler or clinker substitute and cement clinker comprising at least 4% $C_4AF$ (tetracalcium aluminoferrite) by weight of the clinker.

8. A process according to claim 7 wherein the additive is added during the formation of the hydraulic blended cement or during formation of the hydraulic cement mix.

9. A process for preparing a hydraulic portland cement composition characterised in that to a portland cement comprising at least 4% $C_4AF$ (tetracalcium aluminoferrite) by weight is added an additive comprising at least one higher trialkanolamine having at least one $C_3$-$C_5$ hydroxyalkyl group, said amine being present in an amount up to 0.2 weight percent based on the cement and sufficient to increase the 7 and 28 day compressive strength of a cement mix formed with said composition.

10. A process according to claim 9 wherein the amount of higher trialkanolamine is from 0.005 to 0.03 weight percent.

11. A process according to claim 10 wherein the portland cement comprises at least 7 weight percent $C_4AF$.

12. A process according to claim 9, 10 or 11 wherein the additive further comprises a water soluble alkali metal salt.

13. A process according to any one of claims 9 to 12 wherein the additive further comprises an effective amount of at least one set accelerator, air entrainer, air detrainer, water reducer, or set retarder.

14. A process according to claim 13 wherein the additive comprises a set accelerator comprising triethanolamine.

15. A process according to any one of claims 9 to 14 wherein the higher trialkanolamine is triisopropanolamine, N,N-bis(2-hydroxyethyl)-N-(2-hydroxypropyl)amine, tris(2-hydroxybutyl)amine or a mixture thereof.

16. A strength enhanced hydraulic cement comprising a mixture of clinker comprising at least 4% $C_4AF$ (tetracalcium aluminoferrite) by weight of the clinker, gypsum, 5% to 80% by weight filler or clinker substitute together with an additive comprising a higher trialkanolamine having at least one $C_3$-$C_5$ hydroxyalkyl group, said amine being present in an amount of up to 0.2 weight percent based on the cement and sufficient to increase the 7 and 28 day compressive strength of the blended cement.

17. A blended cement according to claim 16 wherein the amount of higher trialkanolamine is from 0.005% to 0.03% by weight.

18. A blended cement according to claim 16 or 17, wherein the clinker comprises at least 7% $C_4AF$ by weight.

19. A blended cement according to claim 16, 17 or 18, wherein the additive comprises a mixture of at least one higher trialkanolamine having at least one $C_3$-$C_5$ hydroxyalkyl group and a water soluble alkali metal salt selected from hydroxide, sulfate, chloride, acetate, formate, carbonate and silicate or a mixture thereof.

20. A blended cement according to claim 16, 17, 18 or 19, wherein the higher trialkanolamine is triisopropanolamine, N,N-bis(2-hydroxyethyl)-N-(2-hydroxypropyl)amine, tris(2-hydroxybutyl)amine or a mixture thereof.

21. A blended cement according to any one of claims 16 to 20, wherein the higher trialkanolamine is in the form of a quaternary salt or of an ester of an organic acid.

22. A hydraulic portland cement composition comprising a portland cement comprising at least 4% $C_4AF$ (tetracalcium aluminoferrite) by weight in combination with an additive comprising at least one higher trialkanolamine having at least one $C_3$-$C_5$ hydroxyalkyl group, said amine being present in an amount up to 0.2 weight percent based on the cement and sufficient to increase the 7 and 28 day compressive strength of a cement mix formed with said composition.

23. A composition according to claim 22 wherein the amount of higher trialkanolamine is from 0.005 to 0.03 weight percent.

24. A composition according to claim 23 wherein the portland cement comprises at least 7 weight percent $C_4AF$.

25. A composition according to claim 22, 23 or 24 wherein the additive further comprises a water soluble alkali metal salt.

26. A composition according to any one of claims 22 to 25 wherein the additive further comprises an effective amount of at least one set accelerator, air entrainer, air detrainer, water reducer, or set retarder.

**27.** A composition according to claim 26 wherein the additive comprises a set accelerator comprising triethanolamine.

**28.** A composition according to any one of claims 22 to 27 wherein the higher trialkanolamine is triisopropanolamine, N,N-bis(2-hydroxethyl)-N-(2-hydroxypropyl)amine, tris(2-hydroxybutyl)amine or a mixture thereof.

**29.** A hydraulic cement mix comprising a portland cement composition as claimed in any one of claims 22 to 28 and water in at least a sufficient amount to effect hydraulic setting of the cement and fine aggregate or coarse aggregate particulate material or a mixture thereof.

**30.** A structure formed from a hydraulic cement mix comprising, as a binding agent, the cement composition claimed in any one of claims 22 to 28.

**31.** A hydraulic cement mix comprising a hydraulic blended cement composition as claimed in any one of claims 16 to 21 and water in at least a sufficient amount to effect hydraulic setting of the cement and fine aggregate or coarse aggregate particulate material or a mixture thereof.

**32.** A structure formed from a hydraulic cement mix comprising, as a binding agent the cement composition claimed in any one of claims 16 to 21.

**Patentansprüche**
**Patentansprüche für folgende Vertragsstaaten : AT, BE, CH, DE, DK, FR, GB, GR, IT, LI, LU, NL, SE**

**1.** Hydraulischer Mischzement mit verbesserter Festigkeit, der eine Mischung aus Klinker, der bezogen auf den Klinker mindestens 4 Gew.-% $C_4AF$ (Tetracalciumaluminoferrit) umfaßt, Gips, 5 bis 80 Gew.-% Füllstoff oder Klinkerersatz zusammen mit einem Additiv umfaßt, das höheres Trialkanolamin mit mindestens einer $C_3$-$C_5$-Hydroxyalkylgruppe umfaßt, wobei das Amin bezogen auf den Zement in einer Menge von bis zu 0,2 Gew.-% vorhanden ist und ausreicht, um die 7- und 28-Tage-Druckfestigkeit des Mischzementes zu steigern.

**2.** Mischzement nach Anspruch 1, bei dem die Menge an höherem Trialkanolamin 0,005 bis 0,03 Gew.-% beträgt.

**3.** Mischzement nach Anspruch 1 oder 2, bei dem der Klinker mindestens 7 Gew.-% $C_4AF$ umfaßt.

**4.** Mischzement nach Anspruch 1, 2 oder 3, bei dem das Additiv eine Mischung von mindestens einem höheren Trialkanolamin mit mindestens einer $C_3$-$C_5$-Hydroxyalkylgruppe und einem wasserlöslichen Alkalimetallsalz ausgewählt aus Hydroxid, Sulfat, Chlorid, Acetat, Formiat, Carbonat und Silikat oder einer Mischung derselben umfaßt.

**5.** Mischzement nach Anspruch 1, 2, 3 oder 4, bei dem das höhere Trialkanolamin Triisopropanolamin, N,N-Bis(2-hydroxethyl)-N-(2-hydroxypropyl)amin, Tris(2-hydroxybutyl)amin oder eine Mischung derselben ist.

**6.** Mischzement nach einem der vorhergehenden Ansprüche, bei dem das höhere Trialkanolamin in Form eines quartären Salzes oder eines Esters einer organischen Säure vorliegt.

**7.** Verfahren zur Verbesserung der Festigkeit von aus hydraulischem Mischzement hergestellten hydraulischen Zementmischungen, bei dem eine wirksame Menge von höherem Trialkanolamin mit mindestens einer $C_3$-$C_5$-Hydroxyalkylgruppe als die Festigkeit verbesserndes Additiv zugesetzt wird, um die 7- und 28-Tage-Festigkeit der resultierenden hydraulischen Zementmischung zu verbessern, die eine Mischung aus Gips, 5 bis 80 Gew.-% Füllstoff oder Klinkerersatz und Zementklinker umfaßt, der bezogen auf den Klinker mindestens 4 Gew.-% $C_4AF$ (Tetracalciumaluminoferrit) umfaßt.

**8.** Verfahren nach Anspruch 7, bei dem das Additiv während der Bildung des hydraulischen Mischzements oder während der Bildung der hydraulischen Zementmischung zugesetzt wird.

EP 0 415 799 B1

**9.** Hydraulische Zementmischung, die einen Portlandzement, der mindestens 4 Gew.-% $C_4AF$ (Tetracalciumaluminoferrit) umfaßt, in Kombination mit einem Additiv umfaßt, das mindestens ein höheres Trialkanolamin mit mindestens einer $C_3$-$C_5$-Hydroxyalkylgruppe umfaßt, wobei das Amin bezogen auf den Zement in einer Menge von bis zu 0,2 Gew.-% vorhanden ist und ausreicht, um die 7- und 28-Tage-Druckfestigkeit einer mit dieser Zusammensetzung gebildeten Zementmischung zu vergrößern.

**10.** Zusammensetzung nach Anspruch 9, bei der die Menge an höherem Trialkanolamin 0,005 bis 0,03 Gew.-% beträgt.

**11.** Zusammensetzung nach Anspruch 10, bei der der Portlandzement mindestens 7 Gew.-% $C_4AF$ umfaßt.

**12.** Zusammensetzung nach Anspruch 9, 10 oder 11, bei der das Additiv ferner wasserlösliches Alkalimetallsalz umfaßt.

**13.** Zusammensetzung nach einem der Ansprüche 9 bis 12, bei der das Additiv ferner eine wirksame Menge mindestens eines Abbindebeschleunigungsmittels, porenbildenden Mittels, Entlüftungsmittels, Wassergehaltsverringerungsmittels oder Abbindeverzögerungsmittels umfaßt.

**14.** Zusammensetzung nach Anspruch 13, bei der das Additiv ein Abbindebeschleunigungsmittel umfaßt, das Triethanolamin umfaßt.

**15.** Zusammensetzung nach einem der Ansprüche 9 bis 14, bei der das höhere Trialkanolamin Triisopropanolamin, N,N-Bis(2-hydroxyethyl)-N-(2-hydroxypropyl)amin, Tris(2-hydroxybutyl)amin oder eine Mischung derselben umfaßt.

**16.** Hydraulische Zementmischung, die eine Portlandzementzusammensetzung gemäß einem der Ansprüche 9 bis 14, Wasser in mindestens einer ausreichenden Menge umfaßt, um ein hydraulisches Abbinden des Zements zu bewirken, und feines oder grobes, teilchenförmiges Zuschlagmaterial oder eine Mischung derselben umfaßt.

**17.** Struktur, die aus einer hydraulischen Zementmischung gebildet worden ist, die als Bindemittel die Zementzusammensetzung gemäß einem der Ansprüche 9 bis 14 umfaßt.

**18.** Hydraulische Zementmischung, die eine hydraulische Mischzementzusammensetzung gemäß einem der Ansprüche 1 bis 6, Wasser in mindestens einer ausreichenden Menge umfaßt, um ein hydraulisches Abbinden des Zements zu bewirken, und feines oder grobes, teilchenförmiges Zuschlagmaterial oder eine Mischung davon umfaßt.

**19.** Struktur, die aus einer hydraulischen Zementmischung gebildet worden ist, die als Bindemittel die Zementzusammensetzung gemäß einem der Ansprüche 1 bis 6 umfaßt.

**Patentansprüche für folgenden Vertragsstaat : ES**

**1.** Verfahren zur Herstellung eines Mischzements mit verbesserter Festigkeit, dadurch gekennzeichnet, daß ein Klinker, der bezogen auf den Klinker mindestens 4 Gew.-% $C_4AF$ (Tetracalciumaluminoferrit) umfaßt, Gips und 5 bis 80 Gew.-% Füllstoff oder Klinkerersatz umfaßt, mit einem Additiv gemischt wird, das höheres Trialkanolamin mit mindestens einer $C_3$-$C_5$-Hydroxyalkylgruppe umfaßt, wobei das Amin bezogen auf den Zement in einer Menge von bis zu 0,2 Gew.-% vorhanden ist und ausreicht, um die 7- und 28-Tage-Druckfestigkeit des Mischzementes zu steigern.

**2.** Verfahren nach Anspruch 1, bei dem die Menge an höherem Trialkanolamin etwa 0,005 bis 0,03 Gew.-% beträgt.

**3.** Verfahren nach Anspruch 1 oder 2, bei dem der Klinker mindestens 7 Gew.-% $C_4AF$ umfaßt.

**4.** Verfahren nach Anspruch 1, 2 oder 3, bei dem das Additiv eine Mischung aus mindestens einem höheren Trialkanolamin mit mindestens einer $C_3$-$C_5$-Hydroxyalkylgruppe und einem wasserlöslichen Alkalimetallsalz ausgewählt aus Hydroxid, Sulfat, Chlorid, Acetat, Formiat, Carbonat und Silikat oder

30

einer Mischung derselben umfaßt.

5. Verfahren nach einem der vorhergehenden Ansprüche, bei dem das höhere Trialkanolamin Triisopropanolamin, N,N-Bis(2-hydroxyethyl)-N-(2-hydroxypropyl)amin, Tris(2-hydroxybutyl)amin oder eine Mischung derselben ist.

6. Verfahren nach einem der vorhergehenden Ansprüche, bei dem das höhere Trialkanolamin in Form eines quartären Salzes oder eines Esters einer organischen Säure vorliegt.

7. Verfahren zur Verbesserung der Festigkeit von aus hydraulischem Mischzement hergestellten hydraulischen Zementmischungen, bei dem eine wirksame Menge von höherem Trialkanolamin mit mindestens einer $C_3$-$C_5$-Hydroxyalkylgruppe als die Festigkeit verbesserndes Additiv zugesetzt wird, um die 7- und 28-Tage-Festigkeit der resultierenden hydraulischen Zementmischung zu verbessern, die eine Mischung aus Gips, 5 bis 80 Gew.-% Füllstoff oder Klinkerersatz und Zementklinker umfaßt, der bezogen auf das Gewicht des Klinkers mindestens 4 Gew.-% $C_4AF$ (Tetracalciumaluminoferrit) umfaßt.

8. Verfahren nach Anspruch 7, bei dem das Additiv während der Bildung des hydraulischen Mischzements oder während der Bildung der hydraulischen Zementmischung zugesetzt wird.

9. Verfahren zur Herstellung einer hydraulischen Portlandzementzusammensetzung, dadurch gekennzeichnet, daß zu einem Portlandzement, der mindestens 4 Gew.-% $C_4AF$ ((Tetracalciumaluminoferrit) umfaßt, ein Additiv gegeben wird, das mindestens ein höheres Trialkanolamin mit mindestens einer $C_3$-$C_5$-Hydroxyalkylgruppe umfaßt, wobei das Amin bezogen auf den Zement in einer Menge von bis zu 0,2 Gew.-% vorhanden ist und ausreicht, um die 7- und 28-Tage-Druckfestigkeit einer mit dieser Zusammensetzung gebildeten Zementmischung zu vergrößern.

10. Verfahren nach Anspruch 9, bei dem die Menge an höherem Trialkanolamin 0,005 bis 0,03 Gew.-% beträgt.

11. Verfahren nach Anspruch 10, bei dem der Portlandzement mindestens 7 Gew.-% $C_4AF$ umfaßt.

12. Verfahren nach Anspruch 9, 10 oder 11, bei dem das Additiv ferner wasserlösliches Alkalimetallsalz umfaßt.

13. Verfahren nach einem der Ansprüche 9 bis 12, bei dem das Additiv ferner eine wirksame Menge mindestens eines Abbindebeschleunigungsmittels, porenbildenden Mittels, entlüftenden Mittels, Wassergehaltsverringerungsmittels oder Abbindeverzögerungsmittels umfaßt.

14. Verfahren nach Anspruch 13, bei dem das Additiv ein Abbindebeschleunigungsmittel umfaßt, das Trialkanolamin umfaßt.

15. Verfahren nach einem der Ansprüche 9 bis 14, bei dem das höhere Trialkanolamin Triisopropanolamin, N,N-Bis(2-hydroxyethyl)-N-(2-hydroxypropyl)amin, Tris(2-hydroxybutyl)amin oder eine Mischung derselben ist.

16. Hydraulischer Zement mit verbesserter Festigkeit, der eine Mischung aus Klinker, der bezogen auf den Klinker mindestens 4 Gew.-% $C_4AF$ (Tetracalciumaluminoferrit) umfaßt, Gips, 5 bis 80 Gew.-% Füllstoff oder Klinkerersatz zusammen mit einem Additiv umfaßt, das höheres Trialkanolamin mit mindestens einer $C_3$-$C_5$-Hydroxyalkylgruppe umfaßt, wobei das Amin bezogen auf den Zement in einer Menge von bis zu 0,2 Gew.-% vorhanden ist und ausreicht, um die 7- und 28-Tage-Druckfestigkeit des Mischzementes zu steigern.

17. Mischzement nach Anspruch 16, bei dem die Menge an höherem Trialkanolamin 0,005 bis 0,03 Gew.-% beträgt.

18. Mischzement nach Anspruch 16 oder 17, bei dem der Klinker mindestens 7 Gew.-% $C_4AF$ umfaßt.

**19.** Mischzement nach Anspruch 16, 17 oder 18, bei dem das Additiv eine Mischung von mindestens einem höheren Trialkanolamin mit mindestens einer $C_3$-$C_5$-Hydroxyalkylgruppe und einem wasserlöslichen Alkalimetallsalz ausgewählt aus Hydroxid, Sulfat, Chlorid, Acetat, Formiat, Carbonat und Silikat oder einer Mischung derselben umfaßt.

**20.** Mischzement nach Anspruch 16, 17, 18 oder 19, bei dem das höhere Trialkanolamin Triisopropanolamin, N,N-Bis(2-hydroxyethyl)-N-(2-hydroxypropyl)amin, Tris(2-hydroxybutyl)amin oder eine Mischung derselben ist.

**21.** Mischzement nach einem der Ansprüche 16 bis 20, bei dem das höhere Trialkanolamin in Form eines quartären Salzes oder eines Esters einer organischen Säure vorliegt.

**22.** Hydraulische Portlandzementzusammensetzung, die einen Portlandzement, der mindestens 4 Gew.-% $C_4AF$ (Tetracalciumaluminoferrit) umfaßt, in Kombination mit einem Additiv umfaßt, das mindestens ein höheres Trialkanolamin mit mindestens einer $C_3$-$C_5$-Hydroxyalkylgruppe umfaßt, wobei das Amin bezogen auf den Zement in einer Menge von bis zu 0,2 Gew.-% vorhanden ist und ausreicht, um die 7- und 28-Tage-Druckfestigkeit einer mit dieser Zusammensetzung gebildeten Zementmischung zu vergrößern.

**23.** Zusammensetzung nach Anspruch 22, bei der die Menge des höheren Trialkanolamins 0,005 bis 0,03 Gew.-% beträgt.

**24.** Zusammensetzung nach Anspruch 23, bei der der Portlandzement mindestens 7 Gew.-% $C_4AF$ umfaßt.

**25.** Zusammensetzung nach Anspruch 22, 23 oder 24, bei der das Additiv ferner wasserlösliches Alkalimetallsalz umfaßt.

**26.** Zusammensetzung nach einem der Ansprüche 22 bis 25, bei der das Additiv ferner eine wirksame Menge mindestens eines Abbindebeschleunigungsmittels, porenbildenden Mittels, entlüftenden Mittels, Wassergehaltverringerungsmittels oder Abbindeverzögerungsmittels umfaßt.

**27.** Zusammensetzung nach Anspruch 26, bei der das Additiv ein Abbindebeschleunigungsmittel umfaßt, das Trialkanolamin umfaßt.

**28.** Zusammensetzung nach einem der Ansprüche 22 bis 27, bei der das höhere Trialkanolamin Triisopropanolamin, N,N-Bis(2-hydroxyethyl)-N-(2-hydroxypropyl)amin, Tris(2-hydroxybutyl)amin oder eine Mischung derselben ist.

**29.** Hydraulische Zementmischung, die eine Portlandzementzusammensetzung gemäß einem der Ansprüche 22 bis 28, Wasser in mindestens einer ausreichenden Menge umfaßt, um ein hydraulisches Abbinden des Zements zu bewirken, und feines oder grobes, teilchenförmiges Zuschlagmaterial oder eine Mischung derselben umfaßt.

**30.** Struktur, die aus einer hydraulischen Zementmischung gebildet worden ist, die als Bindemittel die Zementzusammensetzung gemäß einem der Ansprüche 22 bis 28 umfaßt.

**31.** Hydraulische Zementmischung, die eine hydraulische Mischzementzusammensetzung gemäß einem der Ansprüche 16 bis 21, Wasser in mindestens einer ausreichenden Menge umfaßt, um ein hydraulische Abbinden des Zements zu bewirken, und feines oder grobes, teilchenförmiges Zuschlagmaterial oder eine Mischung derselben umfaßt.

**32.** Struktur, die aus einer hydraulischen Zementmischung gebildet worden ist, die als Bindemittel die Zementzusammensetzung gemäß einem der Ansprüche 16 bis 21 umfaßt.

**Revendications**

**Revendications pour les Etats contractants suivants : AT, BE, CH, DE, DK, FR, GB, GR, IT, LI, LU, NL, SE**

1. Ciment hydraulique mélangé dont la résistance est améliorée, comprenant un mélange de clinker comprenant au moins 4% de $C_4AF$ (aluminoferrite tétracalcique) en poids du clinker, du gypse, 5% à 80% en poids d'une charge ou d'un substitut du clinker avec un additif comprenant une trialcanolamine supérieure ayant au moins un groupe hydroxyalkyle $C_3$-$C_5$, ladite amine étant présente en une quantité pouvant atteindre 0,2% en poids en se basant sur le ciment et suffisante pour augmenter la résistance à la compression à 7 et à 28 jours du ciment mélangé.

2. Ciment mélangé selon la revendication 1 où la quantité de la trialcanolamine supérieure est comprise entre 0,005% et 0,03% en poids.

3. Ciment mélangé selon la revendication 1 ou la revendication 2, où le clinker comprend au moins 7% de $C_4AF$ en poids.

4. Ciment mélangé selon la revendication 1, 2 ou 3 où l'additif comprend un mélange d'au moins une trialcanolamine supérieure ayant au moins un groupe hydroxyalkyle $C_3$-$C_5$ et un sel d'un métal alcalin soluble dans l'eau choisi parmi un hydroxyde, un sulfate, un chlorure, un acétate, un formiate, un carbonate et un silicate ou un mélange.

5. Ciment mélangé selon la revendication 1, 2, 3 ou 4 où la trialcanolamine supérieure est triisopropanolamine, N,N-bis(2-hydroxyéthyl)-N-(2-hydroxypropyl)amine, tris(2-hydroxybutyl)amine ou un mélange.

6. Ciment mélangé selon l'une quelconque des revendications précédentes où la trialcanolamine supérieure est sous la forme d'un sel quaternaire ou d'un ester d'un acide organique.

7. Procédé pour améliorer la résistance de mélanges de ciment hydraulique formés à partir d'un ciment hydraulique mélangé qui comprend l'addition d'une quantité efficace d'une trialcanolamine supérieure ayant au moins un groupe hydroxyalkyle $C_3$-$C_5$, en tant qu'additif améliorant la résistance, pour augmenter la résistance à 7 et à 28 jours du mélange de ciment hydraulique résultant, qui comprend un mélange de gypse, de 5 à 80% en poids d'une charge ou d'un substitut de clinker et du clinker de ciment comprenant au moins 4% de $C_4AF$ (aluminoferrite tétracalcique) en poids du clinker.

8. Procédé selon la revendication 7 où l'additif est ajouté pendant la formation du ciment hydraulique mélangé ou pendant la formation du mélange de ciment hydraulique.

9. Composition de ciment Portland hydraulique comprenant un ciment Portland comprenant au moins 4% de $C_4AF$ (aluminoferrite tétracalcique) en poids, en combinaison avec un additif comprenant au moins une trialcanolamine supérieure ayant au moins un groupe hydroxyalkyle $C_3$-$C_5$, ladite amine étant présente en une quantité pouvant atteindre 0,2% en poids en se basant sur le ciment et suffisante pour augmenter la résistance à la compression à 7 et à 28 jours d'un mélange de ciment formé avec ladite composition.

10. Composition selon la revendication 9 où la quantité de la trialcanolamine supérieure est comprise entre 0,005 et 0,03% en poids.

11. Composition selon la revendication 10 où le ciment Portland comprend au moins 7% en poids de $C_4AF$.

12. Composition selon la revendication 9, 10 ou 11 où l'additif contient de plus un sel d'un métal alcalin soluble dans l'eau.

13. Composition selon l'une quelconque des revendications 9 à 12 où l'additif contient de plus une quantité efficace d'au moins un accélérateur de prise, un entraîneur d'air, un extracteur d'air, un réducteur d'eau ou un retardateur de la prise.

**14.** Composition selon la revendication 13 où l'additif comprend un accélérateur de prise comprenant de la triéthanolamine.

**15.** Composition selon l'une quelconque des revendications 9 à 14 où la trialcanolamine supérieure est la triisopropanolamine, la N,N-bis(2-hydroxyéthyl)-N-(2-hydroxypropyl)amine, la tris(2-hydroxypropyl)-amine ou un mélange.

**16.** Mélange de ciment hydraulique comprenant une composition de ciment Portland selon l'une quelconque des revendications 9 à 14 et de l'eau en au moins une quantité suffisante pour effectuer la prise hydraulique du ciment et du matériau particulaire en agrégat fin ou en agrégat grossier, ou un mélange.

**17.** Structure formée d'un mélange de ciment hydraulique comprenant, comme agent liant, la composition de ciment selon l'une quelconque des revendications 9 à 14.

**18.** Mélange de ciment hydraulique comprenant une composition de ciment hydraulique mélangé selon l'une quelconque des revendications 1 à 6 et de l'eau, au moins en une quantité suffisante pour effectuer la prise hydraulique du ciment et une matière particulaire en agrégat fin ou en agrégat grossier ou un mélange.

**19.** Structure formée d'un mélange de ciment hydraulique comprenant, comme agent liant la composition de ciment revendiquée selon l'une quelconque des revendications 1 à 6.

**Revendications pour l'Etat contractant suivant : ES**

**1.** Procédé de préparation d'un ciment hydraulique mélangé dont la résistance est améliorée, caractérisé en ce qu'un clinker comprenant au moins 4% de $C_4AF$ (aluminoferrite tétracalcique) en poids du clinker, du gypse, 5 à 80% en poids d'une charge ou d'un substitut de clinker, est mélangé avec un additif comprenant une trialcanolamine supérieure ayant au moins un groupe hydroxy-alkyle $C_3$-$C_5$, ladite amine étant présente en une quantité pouvant atteindre 0,2% en poids en se basant sur le ciment et suffisante pour augmenter la résistance à la compression à 7 et 28 jours du ciment mélangé.

**2.** Procédé selon la revendication 1 où la quantité de la trialcanolamine supérieure est comprise entre environ 0,005% et 0,03% en poids.

**3.** Procédé selon la revendication 1 ou 2, où le clinker comprend au moins 7% de $C_4AF$ en poids.

**4.** Procédé selon la revendication 1, 2 ou 3 où l'additif comprend un mélange d'au moins une trialcanolamine supérieure ayant au moins un groupe hydroxyalkyle $C_3$-$C_5$ et un sel d'un métal alcalin soluble dans l'eau choisi parmi un hydroxyde, un sulfate, un chlorure, un acétate, un formiate, un carbonate et un silicate ou un mélange.

**5.** Procédé selon l'une quelconque des revendications précédentes où la trialcanolamine supérieure est triisopropanolamine, N,N-bis(2-hydroxyéthyl)-N-(2-hydroxypropyl)amine,tris(2-hydroxybutyl)amine ou un mélange.

**6.** Procédé selon l'une quelconque des revendications précédentes où la trialcanolamine supérieure est sous la forme d'un sel quaternaire ou d'un ester d'un acide organique.

**7.** Procédé pour améliorer la résistance de mélanges de ciment hydraulique formés à partir d'un ciment hydraulique mélangé qui comprend l'addition d'une quantité efficace d'une trialcanolamine supérieure ayant au moins un groupe hydroxyalkyle $C_3$-$C_5$, en tant qu'additif améliorant la résistance, pour augmenter la résistance à 7 et à 28 jours du mélange de ciment hydraulique résultant, qui comprend un mélange de gypse, de 5 à 80% en poids d'une charge ou d'un substitut de clinker et du clinker de ciment comprenant au moins 4% de $C_4AF$ (aluminoferrite tétracalcique) en poids du clinker.

**8.** Procédé selon la revendication 7 où l'additif est ajouté pendant la formation du ciment hydraulique mélangé ou pendant la formation du mélange de ciment hydraulique.

9. Procédé de préparation d'une composition de ciment Portland hydraulique caractérisé en ce qu'à un ciment Portland comprenant au moins 4% de $C_4AF$ (aluminoferrite tétracalcique) en poids, on ajoute un additif comprenant au moins une trialcanolamine supérieure ayant au moins un groupe hydroxyalkyle $C_3$-$C_5$,ladite amine étant présente en une quantité pouvant atteindre 0,2% en poids en se basant sur le ciment et suffisante pour augmenter la résistance à la compression à 7 et 28 jours d'un mélange de ciment formé avec ladite composition.

10. Procédé selon la revendication 9 où la quantité de la trialcanolamine supérieure est comprise entre 0,005 et 0,03 pour cent en poids.

11. Procédé selon la revendication 10 où le ciment portland comprend au moins 7% en poids de $C_4AF$.

12. Procédé selon la revendication 9, 10 ou 11 où l'additif contient de plus un sel d'un métal alcalin soluble dans l'eau.

13. Procédé selon l'une quelconque des revendications 9 à 12 où l'additif contient de plus une quantité efficace d'au moins un accélérateur de prise, un entraîneur d'air, un extracteur d'air, un réducteur d'eau, ou un retardateur de la prise.

14. Composition selon la revendication 13 où l'additif comprend un accélérateur de prise comprenant de la triéthanolamine.

15. Procédé selon l'une quelconque des revendications 9 à 14 où la trialcanolamine supérieure est la triisopropanolamine, la N,N-bis(2-hydroxyéthyl)-N-(2-hydroxypropyl)amine, la tris(2-hydroxybutyl)amine ou un mélange.

16. Ciment hydraulique dont la résistance est améliorée, comprenant un mélange de clinker comprenant au moins 4% de $C_4AF$ (aluminoferrite tétracalcique) en poids du clinker, du gypse, 5 à 80% en poids d'une charge ou d'un substitut de clinker avec un additif comprenant une trialcanolamine supérieure ayant au moins un groupe hydroxyalkyle $C_3$-$C_5$, ladite amine étant présente en une quantité pouvant atteindre 0,2% en poids en se basant sur le ciment et suffisante pour augmenter la résistance à la compression à 7 et 28 jours du ciment mélangé.

17. Ciment mélangé selon la revendication 16 où la quantité de la trialcanolamine supérieure est comprise entre 0,005% et 0,03% en poids.

18. Ciment mélangé selon la revendication 16 ou 17, où le clinker comprend au moins 7% de $C_4AF$ en poids.

19. Ciment mélangé selon la revendication 16, 17 ou 18, où l'additif comprend un mélange d'au moins une trialcanolamine supérieure ayant au moins un groupe hydroxyalkyle $C_3$-$C_5$ et un sel d'un métal alcalin soluble dans l'eau choisi parmi un hydroxyde, sulfate, chlorure, acétate, formiate, carbonate et silicate ou leur mélange.

20. Ciment mélangé selon la revendication 16, 17, 18 ou 19, où la trialcanolamine supérieure est la triisopropanolamine, la N,N-bis(2-hydroxyéthyl)-N-(2 hydroxypropyl)amine, la tris(2-hydroxybutyl)amine ou un mélange.

21. Ciment mélangé selon l'une quelconque des revendications 16 à 20, où la trialcanolamine supérieure est sous la forme d'un sel quaternaire ou d'un ester d'un acide organique.

22. Composition de ciment portland hydraulique comprenant un ciment portland comprenant au moins 4% de $C_4AF$ (aluminoferrite tétracalcique) en poids en combinaison avec un additif comprenant au moins une trialcanolamine supérieure ayant au moins un groupe hydroxyalkyle $C_3$-$C_5$, ladite amine étant présente en une quantité pouvant atteindre 0,2% en poids en se basant sur le ciment et suffisante pour augmenter la résistance à la compression à 7 et 28 jours d'un mélange de ciment formé de ladite composition.

**23.** Composition selon la revendication 22 où la quantité de la trialcanolamine supérieure est comprise entre 0,005 et 0,03 pour cent en poids.

**24.** Composition selon la revendication 23 où le ciment portland comprend au moins 7 pourcent en poids de $C_4AF$.

**25.** Composition selon la revendication 22, 23 ou 24 où l'additif contient de plus un sel d'un métal alcalin soluble dans l'eau.

**26.** Composition selon l'une quelconque des revendications 22 à 25 où l'additif contient de plus une quantité efficace d'au moins un accélérateur de prise, un entraîneur d'air, un extracteur d'air, un réducteur d'eau ou un retardateur de la prise.

**27.** Composition selon la revendication 26 où l'additif contient un accélérateur de prise comprenant de la triéthanolamine.

**28.** Composition selon l'une quelconque des revendications 22 à 24 où la trialcanolamine supérieure est la triisopropanolamine, la N,N-bis(2-hydroxyéthyl)-N-(2-hydroxypropyl)amine, la tris(2-hydroxybutyl)amine ou un mélange.

**29.** Mélange de ciment hydraulique comprenant une composition de ciment portland selon l'une quelconque des revendications 22 à 28 et de l'eau, au moins en une quantité suffisante pour effectuer la prise hydraulique du ciment, et une matière particulaire en agrégat fin ou en agrégat grossier ou un mélange.

**30.** Structure formée d'un mélange de ciment hydraulique comprenant comme agent liant la composition de ciment selon l'une quelconque des revendications 22 à 28.

**31.** Mélange de ciment hydraulique comprenant une composition de ciment hydraulique mélangé selon l'une quelconque des revendications 16 à 21 et de l'eau au moins en une quantité suffisante pour effectuer la prise hydraulique du ciment et une matière particulaire en agrégat fin ou agrégat grossier ou un mélange.

**32.** Structure formée d'un mélange de ciment hydraulique comprenant, comme agent liant, la composition de ciment selon l'une quelconque des revendications 16 à 21.